(19) Europäisches Patentamt
European Patent Office
Office européen des brevets

(11) **EP 1 456 726 B1**

(12) **FASCICULE DE BREVET EUROPEEN**

(45) Date de publication et mention
de la délivrance du brevet:
**27.06.2012 Bulletin 2012/26**

(21) Numéro de dépôt: **02801114.6**

(22) Date de dépôt: **11.12.2002**

(51) Int Cl.:
***G05D 1/08*** ***(2006.01)***

(86) Numéro de dépôt international:
**PCT/FR2002/004287**

(87) Numéro de publication internationale:
**WO 2003/050630 (19.06.2003 Gazette 2003/25)**

(54) **PROCEDE D'ESTIMATION D'ATTITUDE DE DISPOSITIF SPATIAL A PRECISION AMELIOREE**

LAGEBESTIMMUNGSVERFAHREN MIT VERBESSERTER GENAUIGKEIT FÜR EIN RAUMFAHRZEUG

METHOD OF ESTIMATING THE ATTITUDE OF A SPACE DEVICE WITH IMPROVED PRECISION

(84) Etats contractants désignés:
**AT BE BG CH CY CZ DE DK EE ES FI FR GB GR IE IT LI LU MC NL PT SE SI SK TR**

(30) Priorité: **12.12.2001 FR 0116034**

(43) Date de publication de la demande:
**15.09.2004 Bulletin 2004/38**

(73) Titulaire: **CENTRE NATIONAL D'ETUDES SPATIALES**
**75001 Paris (FR)**

(72) Inventeurs:
• **SEBBAG, Isabelle**
**31400 Toulouse (FR)**
• **PERRET, lIONEL**
**31570 Saint Pierre De Lages (FR)**

(74) Mandataire: **Le Forestier, Eric et al**
**Cabinet Regimbeau**
**20, rue de Chazelles**
**75847 Paris Cedex 17 (FR)**

(56) Documents cités:
WO-A-97/11882    US-A- 4 617 634
US-A- 5 177 686    US-B1- 6 227 496

**Description**

L'invention concerne l'estimation d'attitude d'un dispositif spatial tel qu'un satellite à l'aide d'un senseur stellaire monté sur un tel dispositif, et plus précisément la réduction des erreurs apparaissant dans une telle estimation d'attitude.

On vise plus précisément ici la réduction des erreurs dites « champ de vue ».

On connait des systèmes permettant d'estimer l'attitude de dispositifs spatiaux de document US-A-4 617 634 décrit par exemple un système utilisant des senseurs inertiels et des senseurs stellaires pour estimer l'attitude réelle d'un satellite.

Les performances de localisation absolue pour un satellite d'observation sont de nos jours très ambitieuses : on demande par exemple une précision de 10 m dans 90% des cas et 20 m dans 99,7% des cas. Les principaux postes contribuant à cette performance sont l'erreur de restitution d'attitude, d'une part, et les déformées thermo-élastiques entre la ligne de visée instrument et les senseurs d'attitude, d'autre part.

On peut par exemple définir et proposer un système de mesure d'attitude gyrostellaire basé sur 3 gyromètres FOG très hautes performances et trois senseurs stellaires grand champ ($\approx$ 25°).

Les senseurs stellaires présentent différentes sources d'erreur de mesure d'attitude, que l'on peut classifier suivant leur nature temporelle. Généralement on distingue : biais, harmoniques, erreur « champ de vue » (ou « FOV » en anglais), bruit blanc. En effet, l'impact de ces différentes catégories temporelles sur la performance du sous-ensemble de restitution d'attitude est différent. En particulier, le filtrage gyrostellaire permet de réduire l'impact de la catégorie « bruit ». La catégorie harmonique a une origine essentiellement thermo élastique, dont l'impact peut être limité par la maîtrise de l'environnement thermique du senseur. La catégorie biais a un impact faible dans la mesure où des moyens d'étalonnage peuvent être mis en oeuvre.

L'impact de l'erreur « champ de vue » d'un senseur stellaire est prépondérant sur la performance de restitution de l'attitude d'un tel senseur stellaire ou du dispositif spatial sur lequel il est monté. Cela conduit à l'émission de spécifications assez dures sur les senseurs stellaires auquel il n'existait pas de réponse jusqu'à présent. Les spécifications ont d'ailleurs été relâchées dans le but de s'adapter à l'existant.

Dans ce contexte, les bilans analytiques font état d'une hypothèse sur l'erreur « champ de vue » dans un cas 3 FOG + 3 SST de 10 $\mu$radians, ramenés à 6 $\mu$radians par le filtre estimateur gyrostellaire. Cette erreur, combinée de manière quadratique à d'autres postes, donne lieu à un bilan global SCAO de 11 $\mu$radians, pour une allocation de 13 $\mu$radians. Les configurations à 2 ou 1 SST conduisent à des performances dégradées. Ces constats ont été confortés par des bilans statistiques menés à partir de simulations, et conduisent aujourd'hui vers un nouveau durcissement des spécifications d'erreur « FOV » émises vers les fournisseurs de senseurs stellaires.

Les erreurs « champ de vue » ont pour origine des phénomènes tels que méconnaissance et fluctuation de la distance focale, résidus d'étalonnage de la distorsion, aberrations chromatiques, erreurs de connaissance de la position absolue des étoiles (erreurs catalogue, résidus de corrections relativistes). Ils se traduisent par des erreurs de mesure de la position de chaque étoile dans le plan focal, d'amplitude et de direction variable en fonction de la position de l'étoile dans le champ de vue. Les senseurs stellaires grand champ poursuivent un grand nombre d'étoiles simultanément (typiquement entre une dizaine et quelques dizaines). L'erreur de mesure d'attitude qui en résulte dépend de la répartition des étoiles dans le champ de vue et de sa variation dans le temps sous l'effet de la vitesse angulaire du satellite porteur.

Dans le cas d'un pointage géocentrique et a fortiori d'un satellite manoeuvrant, l'erreur de restitution induite peut se modéliser comme un bruit filtré par un filtre passe-bas dont la constante de temps est liée à la durée moyenne de traversée du champ de vue par une étoile. En raison des constantes de temps relativement élevées qui en découlent (une centaine de secondes), un tel bruit est difficilement réduit par le filtre estimateur d'attitude qui combine les mesures stellaires avec les mesures gyrométriques.

Dans le cas d'un pointage inertiel (pointage solaire par exemple), cette erreur demeure sensiblement constante et n'est absolument plus filtrée par l'algorithme estimateur d'attitude.

De plus, cette modélisation des erreurs champ de vue est assez théorique, des simulations complètes couplant une modélisation fine du senseur avec une modélisation de la cinématique seraient nécessaires pour les quantifier plus précisément.

En parallèle, il apparaît donc opportun d'analyser des pistes permettant de réduire cette source d'erreur sans impact sur l'architecture matérielle des senseurs existants, au moyen, par exemple, d'un algorithme d'étalonnage en ligne.

L'invention se propose de réduire l'ampleur des erreurs « champ de vue » dans les procédés d'estimation d'attitude.

A cette fin, on propose un dispositif de détermination de l'attitude d'un dispositif spatial conforme aux revendications annexées.

D'autres caractéristiques, buts et avantages de l'invention apparaîtront à la lecture de la description détaillée qui va suivre, faite en référence aux figures annexées sur lesquelles :

- la figure 1 représente un champ de vue face à un détecteur utilisé pour mettre en oeuvre l'invention ;

- la figure 2 illustre des repères utilisés pour mettre en oeuvre des étapes de mesure et de calcul d'un procédé préférentiel de mise en oeuvre de l'invention ;
- la figure 3 représente un champ de douze étoiles utilisé pour l'analyse des effets du procédé selon l'invention ;
- la figure 4 illustre les effets d'un bruit sur les résultats d'estimation d'attitude avec un procédé classique ;
- la figure 5 illustre les effets d'un bruit et d'une méconnaissance de focale sur les résultats d'un procédé classique ;
- la figure 6 illustre les effets sur les résultats obtenus avec un procédé classique, d'un bruit, d'une méconnaissance de la focale et d'une distorsion au centre du champ ;
- la figure 7 illustre les effets de ces mêmes erreurs sur les résultats d'un procédé intégrant une estimation de la distance focale au centre du champ ;
- la figure 8 illustre les effets d'un algorithme avec des estimations de distorsion, selon l'invention ;
- la figure 9 représente plusieurs cas de configurations d'étoiles utilisées pour tester un procédé préférentiel selon l'invention ;
- les figures 10a à 10f représentent des résultats obtenus avec et sans procédé selon l'invention dans le cas de différentes configurations d'étoiles ;
- les figures 11a à 11f illustrent des résultats obtenus avec et sans procédé selon l'invention dans le cas d'estimations avec erreurs de pointage ;
- les figures 12 à 12f illustrent des résultats obtenus dans le cas de distorsions accentuées ;
- les figures 13a à 13f illustrent des résultats obtenus dans le cas de distorsions amoindries ;
- les figures 14a à 14f illustrent des résultats obtenus dans le cas d'erreurs non radiales d'amplitude de 0,3" ;
- les figures 15a à 15f illustrent des résultats obtenus dans le cas d'erreurs non radiales d'amplitude de 1" ;
- les figures 16a à 16f illustrent des résultats obtenus dans le cas d'erreurs non radiales d'amplitude de 5" ;
- les figures 17a à 17c représentent des sorties temporelles d'attitude calculée au moyen d'un filtrage classique ;
- la figure 18 représente une répartition de rayons lumineux faisant apparaître une distorsion ;
- les figures 19a à 19c représentent des courbes temporelles d'écart d'attitude estimé avec un filtrage classique ;
- la figure 20 représente un repère de calcul pour un procédé selon une variante de l'invention ;
- les figures 21a à 21f représentent des résultats obtenus avec trois algorithmes, dont deux selon l'invention, pour de multiples configurations stellaires fixes ;
- la figure 22 illustre l'impact d'un défilement stellaire sur des performances d'estimation ;
- les figures 23a à 23f représentent l'impact d'un défilement stellaire sur des performances d'estimation ;
- la figure 24 montre des résultats obtenus avec un algorithme classique, pour des paysages défilant et fixe ;
- la figure 25 représente des densités spectrales d'un angle $\varphi$ avec filtrage classique ;
- la figure 26 représente les mêmes éléments que la figure 25 mais avec utilisation d'un filtre estimant la distorsion ;
- la figure 27 représente des densités spectrales de sorties filtrées ;

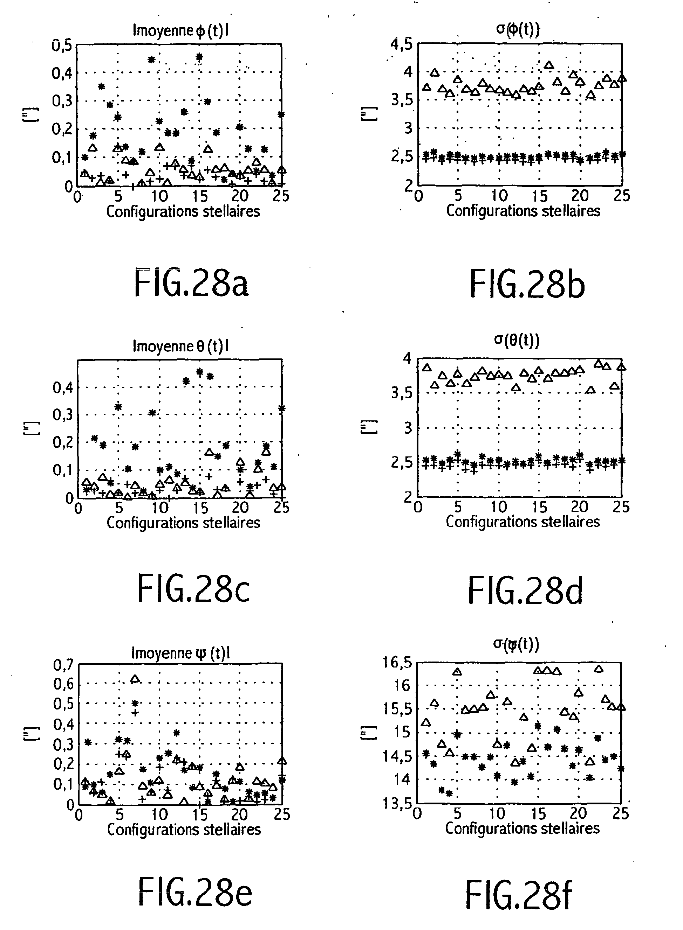

- les figures 28a à 28f représentent les résultats d'une estimation avec passage défilant à une vitesse de 0,1 °/S ;
- les figures 29a et 29b représentent des densités spectrales d'un résidu de distorsion ;
- les figures 30a à 30f représentent le résultat d'une estimation avec loi radiale de distorsion comportant un paramètre d'ordre 3 ;
- les figures 31a à 31f représentent le résultat d'une estimation avec une erreur de pointage de type « vibration », de 500 $\mu$m ;
- les figures 32a à 32f représentent le résultat d'une estimation avec une erreur de pointage de type « biais », de 500 $\mu$m ;
- les figures 33a à 33f représentent des résultats obtenus avec des erreurs de distorsion cinq fois plus forte ;
- les figures 34a à 34f représentent des résultats obtenus avec des erreurs de distorsion cinq fois plus faibles ;
- les figures 35a à 35f illustrent des résultats obtenus avec des erreurs de type non radiales, de 1" ;
- les figures 36a à 36f illustrent des résultats obtenus avec des erreurs de type non radiales, de 5".

Des hypothèses typiques sur les caractéristiques d'un senseur stellaire sont celles données ci-après, afin d'évaluer l'algorithme proposé dans des conditions représentatives :

- champ de vue de 25°x25° ;
- focale de 30 cm ;
- nombre d'étoiles poursuivies : 10 ;
- erreurs de mesure au niveau d'une étoile :

  - bruit : 37" à 3$\sigma$ ;
  - fluctuation de la distance focale : 1,5"/°K en bord de champ avec une stabilité de l'environnement thermique de $\pm$ 2°C ;
  - résidu de distorsion : 9" à 3$\sigma$ ;

- aberration chromatique : 3" à 3σ ;
- erreurs catalogue : 0,3" à 3σ.

On évaluera, dans la suite de l'exposé, un exemple préféré de mise en oeuvre de l'invention, grâce à des simulations réalisées dans le cadre de cette étude basées sur un outil de simulation d'une fonction écartométrie d'un instrument appelé COROT, développé par le déposant, et qui permet de représenter :

- la désignation en position et magnitude d'étoiles présentes dans le champ de vue,
- la fluctuation de l'attitude réelle autour d'une consigne de pointage inertiel,
- la mesure de la position des étoiles sur le détecteur en tenant compte de différentes sources d'erreur,
- l'algorithme de restitution d'attitude.

Parmi les sources d'erreur, on prend en compte :

- un bruit de mesure du barycentre de la tache étoile, dont l'écart type dépend de la magnitude,
- une erreur d'interpolation,
- une fluctuation temporelle de la distance focale au centre du champ (modèle harmonique non centré),
- la distorsion représentée comme une valeur de la distance focale propre à chaque étoile en fonction de sa position dans le champ.

On a cherché à minimiser les modifications sur l'outil. Outre l'implantation de l'algorithme proposé, ces modifications ont principalement consisté à prendre en compte certaines données de configuration telles que la taille du champ de vue, la distance focale et les paramètres d'erreur. En particulier, le nombre de pixels sur le détecteur reste identique à celui du cas COROT (4140x4140), afin d'éviter la modification des interfaces avec le catalogue d'entrée, dans lequel la position de consigne des étoiles est définie en pixels. Le champ de vue est défini comme le cercle dans lequel s'inscrit le détecteur, comme illustré. Ceci conduit à une taille du pixel « fictif » de 22,71 $\mu$m, soit 15,37". Le champ de vue et la distance focale ont les valeurs définies au paragraphe 2.

Le fonctionnement en pointage inertiel sur un champ pré défini a été maintenu, ce qui facilite l'interprétation des effets des erreurs et des algorithmes par rapport au cas où les étoiles défilent dans le champ de vue. Pour la même raison, on prend en compte une méconnaissance de la distance focale au centre du champ constante dans le temps.

Dans le cas des senseur stellaires, l'erreur due à la distorsion est liée à un résidu d'étalonnage pour lequel on ne dispose pas d'hypothèse sur la répartition dans le champ. On a fait l'hypothèse d'une répartition aléatoire dans le champ, suivant une loi uniforme entre 0 et ie maximum calculé comme suit.

On peut toutefois supposer que l'effet des résidus de distorsion et de méconnaissance de la focale est plus important en bord de champ. La relation qui relie au premier ordre la fluctuation sur la focale df à l'erreur de mesure en

bord de champ d$\theta$ est : $df = \dfrac{2 \cdot f}{FOV} \cdot d\theta$ .

On prend donc en compte une fluctuation thermo élastique de la distance focale de 10 $\mu$m par °K, et une valeur maximale de la distorsion de 60 $\mu$m.

L'erreur d'interpolation n'est pas prise en compte, et dans un souci de simplification, chaque étoile est affectée d'un bruit de mesure en position réparti de manière quadratique sur les deux axes, soit un écart type de 9" ou 0,6 pixels par axe, quelle que soit sa magnitude.

On va décrire maintenant un procédé préféré d'estimation de l'attitude d'un senseur ou du dispositif spatial sur lequel il est monté (ici un satellite).

On définit comme suit un repère tridimensionnel associé au senseur :

- Zs est la normale au détecteur dirigée vers l'espace,
- Xs et Ys sont dans un plan parallèle au plan du détecteur tels que définis par le schéma ci-dessus.

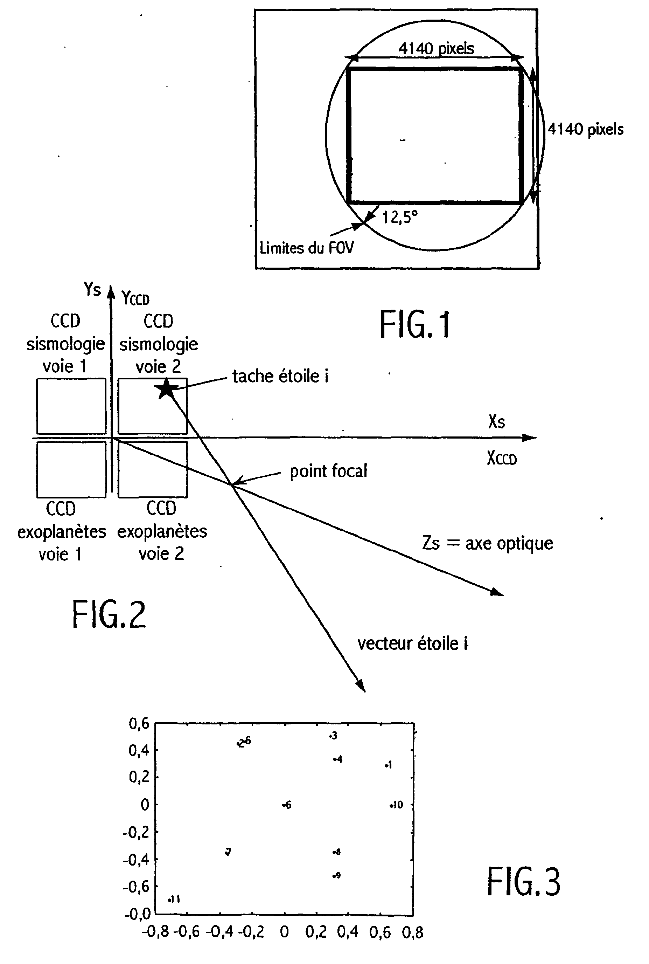

On définit également (figure 2) un repère à deux dimensions lié au détecteur, dont l'origine se trouve à l'intersection de l'axe optique et du plan du détecteurs. Les axes $x_{CCD}$ et $y_{CCD}$ sont respectivement parallèles à Xs et Ys.

A chaque étoile, indexée par l'indice i, est associé un vecteur de consigne normalisé en repère senseur Vi. Pour une distance focale de référence au centre du champ $f_{réf}$, ce vecteur Vi est défini comme suit, à partir de la position de consigne $(x_i, y_i)$ de l'étoile dans le repère détecteur.

On a :

$$V_i = \begin{pmatrix} vix \\ viy \\ viz \end{pmatrix}$$

$$x_i = f_{réf} \cdot \frac{V_i \cdot X_s}{V_i \cdot Z_s} = \frac{vix}{viz} \quad et \quad y_i = f_{réf} \cdot \frac{V_i \cdot Y_s}{V_i \cdot Z_s} = \frac{viy}{viz}$$

on a aussi :

$$V_i = \frac{1}{\sqrt{1 + \left(\dfrac{x_i}{f_{réf}}\right)^2 + \left(\dfrac{y_i}{f_{réf}}\right)^2}} \begin{pmatrix} \dfrac{x_i}{f_{réf}} \\ \dfrac{y_i}{f_{réf}} \\ 1 \end{pmatrix}$$

Le repère « de consigne » du senseur Rc, est tel que, dans ce repère, les directions des étoiles poursuivies soient confondues avec les vecteurs Vi. Le repère réel du senseur Rs est tel que les directions des étoiles cibles en repère senseur deviennent les vecteurs Wi. La restitution d'attitude consiste à estimer les écarts angulaires entre le repère réel du senseur et son repère de consigne.
On définit la convention de rotations suivante :

$$R_c \xrightarrow{\;\psi \bar{Z}_c\;} R' \xrightarrow{\;\theta \bar{Y}\;} R'' \xrightarrow{\;\varphi \bar{X}''\;} R_s$$

On peut exprimer Wi en fonction de Vi :

$$Wi = \begin{pmatrix} \cos\psi\cos\theta & \sin\psi\cos\theta & -\sin\theta \\ \cos\psi\sin\theta\sin\varphi - \sin\psi\cos\varphi & \sin\psi\sin\theta\sin\varphi + \cos\psi\cos\varphi & \cos\theta\sin\varphi \\ \cos\psi\sin\theta\cos\varphi + \sin\psi\sin\varphi & \sin\psi\sin\theta\cos\varphi - \cos\psi\sin\varphi & \cos\theta\cos\varphi \end{pmatrix} \cdot Vi$$

En l'absence d'erreur de mesure, les mesures théoriques associées à Wi sont :

$$xm_i = f_{réf} \cdot \frac{Wi \cdot X_s}{Wi \cdot Z_s} \quad et \quad ym_i = f_{réf} \cdot \frac{Wi \cdot Y_s}{Wi \cdot Z_s}$$

On peut reconstituer les composantes de Wi à partir de ces mesures :

$$W_i = \frac{1}{\sqrt{1 + \left(\dfrac{xm_i}{f_{réf}}\right)^2 + \left(\dfrac{ym_i}{f_{réf}}\right)^2}} \begin{pmatrix} \dfrac{xm_i}{f_{réf}} \\ \dfrac{ym_i}{f_{réf}} \\ 1 \end{pmatrix}$$

Le lien entre position de l'étoile sur le détecteur et vecteur associé en axes senseur repose donc sur la connaissance d'une distance focale.

La distance focale sert ainsi à transformer les coordonnées d'une projection optique d'une étoile, projection obtenue sur une surface de projection du senseur, en une direction senseur-étoile par rapport au senseur.

La méthode par moindres carrés repose sur une linéarisation des équations de mesure autour de la consigne. On suppose alors que les angles $\varphi$, $\theta$, $\psi$ sont petits devant 1, et on a, au premier ordre :

$$Wi \approx \begin{pmatrix} 1 & \psi & -\theta \\ -\psi & 1 & \varphi \\ \theta & -\varphi & 1 \end{pmatrix} \cdot Vi$$

Donc, toujours au premier ordre :

$$\frac{xm_i}{f_{réf}} = -\frac{vix + \psi \cdot viy - \theta \cdot viz}{viz + \theta \cdot vix - \varphi \cdot viy} \approx -\left(\frac{vix}{viz} + \varphi \cdot \frac{vix \cdot viy}{viz^2} - \theta \cdot \left(1 + \frac{vix^2}{viz^2}\right) + \psi \cdot \frac{viy}{viz}\right)$$

$$\frac{ym_i}{f_{réf}} = -\frac{viy - \psi \cdot vix + \varphi \cdot viz}{viz + \theta \cdot vix - \varphi \cdot viy} \approx -\left(\frac{viy}{viz} + \varphi \cdot \left(1 + \frac{viy^2}{viz^2}\right) - \theta \cdot \frac{vix \cdot viy}{viz^2} - \psi \cdot \frac{vix}{viz}\right)$$

D'où pour chaque cible deux équations de mesure :

$$\Delta_i = \begin{pmatrix} \dfrac{xm_i - x_i}{f_{réf}} \\ \dfrac{ym_i - y_i}{f_{réf}} \end{pmatrix} = \begin{pmatrix} \dfrac{vix \cdot viy}{viz^2} & -\left(1 + \dfrac{vix^2}{viz^2}\right) & \dfrac{viy}{viz} \\ \left(1 + \dfrac{viy^2}{viz^2}\right) & -\dfrac{vix \cdot viy}{viz^2} & -\dfrac{vix}{viz} \end{pmatrix} \cdot \begin{pmatrix} \varphi \\ \theta \\ \psi \end{pmatrix} = J_i \cdot \begin{pmatrix} \varphi \\ \theta \\ \psi \end{pmatrix}$$

En cumulant les équations associées à n cibles on peut ainsi construire la matrice jacobienne J de dimension 2nx3 telle que :

$$\begin{pmatrix} \vdots \\ \Delta_i \\ \vdots \end{pmatrix} = \begin{pmatrix} \vdots \\ J_i \\ \vdots \end{pmatrix} \cdot \begin{pmatrix} \varphi \\ \theta \\ \psi \end{pmatrix} = J \cdot \begin{pmatrix} \varphi \\ \theta \\ \psi \end{pmatrix}$$

En présence d'erreurs de mesure, cet ensemble d'équations linéaires se résout par moindres carrés. La solution qui minimise le critère :

$$C = \sum \left( \left( \frac{xm_i - x_i}{f_{réf}} \right)^2 + \left( \frac{ym_i - y_i}{f_{réf}} \right)^2 \right)$$

est donnée par:

$$\begin{pmatrix} \varphi \\ \theta \\ \psi \end{pmatrix} = \left[ \sum_i (\cdots \quad J_i^T \quad \cdots) \cdot \begin{pmatrix} \vdots \\ J_i \\ \vdots \end{pmatrix} \right]^{-1} \cdot \sum_i \left( (\cdots \quad J_i^T \quad \cdots) \cdot \begin{pmatrix} \vdots \\ \Delta_i \\ \vdots \end{pmatrix} \right)$$

Il est également possible d'introduire une pondération des différentes mesures. En particulier, pour une même étoile, on peut envisager des pondérations différentes $\sigma x_i$ et $\sigma y_i$ sur les mesures en x et en y. Dans ce cas, la solution est fournie par la même équation, dans laquelle on remplace formellement :

$$\frac{xm_i - x_i}{f_{réf}} \quad par \quad \frac{xm_i - x_i}{f_{réf} \cdot \sigma x_i} \qquad et \qquad \frac{ym_i - y_i}{f_{réf}} \quad par \quad \frac{ym_i - y_i}{f_{réf} \cdot \sigma y_i}$$

Enfin, il est également possible d'utiliser cette méthode de manière itérative.

Des travaux réalisés par le déposant sur la définition d'une fonction écartométrique d'un instrument nommé COROT ont montré que cette méthode donne des résultats similaires à ceux obtenus par un algorithme sans linéarisation de type QUEST, même en présence d'erreurs de pointage, et que les itérations n'offrent pas d'intérêt particulier.

Les travaux menés sur COROT ont montré la possibilité de réduire significativement l'impact de la méconnaissance de la distance focale sur l'erreur de mesure d'attitude. Le moyen pour cela consiste en une formulation des équations de mesure d'attitude internes au senseur, qui intègre la méconnaissance sur la distance focale comme inconnue. C'est possible tant que le nombre d'équations (égal à 2 fois le nombre d'étoiles mesurées) reste supérieur ou égal au nombre d'inconnues (soit 4 aux petits angles). Cela suppose de disposer d'une connaissance approchée de l'attitude (par exemple l'attitude de consigne dans le cas d'un satellite guidé). Cela suppose également de traiter les mesures au niveau de chaque étoile.

Cette méthode a été évaluée par simulation et donnait des résultats très satisfaisants à partir de deux étoiles poursuivies.

Pour cela, partant de la méthode décrite ci-dessus, on peut intégrer des inconnues supplémentaires telles que la fluctuation de la distance focale, moyennant une adaptation des équations de mesure.

On définit $\delta fsf$ :   $\delta fsf = \dfrac{f_v - f_{réf}}{f_{réf}}$ ,

ou encore : $f_v = f_{réf} \cdot (1 + \delta fsf)$

En supposant que $\varphi$, $\theta$, $\psi$ et $\delta fsf$ sont petits devant 1, on établit les équations suivantes, pour chaque étoile :

$$\Delta_i = \begin{pmatrix} \dfrac{xm_i - x_i}{f_{réf}} \\ \dfrac{ym_i - y_i}{f_{réf}} \end{pmatrix} = \begin{pmatrix} \dfrac{vix \cdot viy}{viz^2} & -(1 + \dfrac{vix^2}{viz^2}) & \dfrac{viy}{viz} & \dfrac{vix}{viz} \\ (1 + \dfrac{viy^2}{viz^2}) & -\dfrac{vix \cdot viy}{viz^2} & -\dfrac{vix}{viz} & \dfrac{viy}{viz} \end{pmatrix} \cdot \begin{pmatrix} \varphi \\ \theta \\ \psi \\ \delta fsf \end{pmatrix} = J_i \cdot \begin{pmatrix} \varphi \\ \theta \\ \psi \\ \delta fsf \end{pmatrix}$$

Le cumul des équations associées à l'ensemble des N étoiles permet de construire la matrice jacobienne J, de dimension 2Nx4, et de résoudre le système linéaire par moindres carrés.

On propose ici une extension de cet algorithme à l'estimation de la distance focale propre à chaque étoile (soit de la distorsion).

Si on considère que la distorsion équivaut à une dispersion de la distance focale dans le champ de vue (généralement comme une fonction croissante de la distance au centre du champ), la méthode ci-dessus peut être étendue à chaque étoile. Le vecteur des inconnues est alors de dimension 3+N :

A chaque étoile est associée une valeur locale de la distance focale $f_i$, et on définit $\delta fsf_i = \dfrac{f_i - f_{réf}}{f_{réf}}$

Chaque étoile poursuivie permet d'établir les équations de mesure :

$$\Delta_i = \begin{pmatrix} \dfrac{xm_i - x_i}{f_{réf}} \\ \dfrac{ym_i - y_i}{f_{réf}} \end{pmatrix} = \begin{pmatrix} \dfrac{vix \cdot viy}{viz^2} & -(1+\dfrac{vix^2}{viz^2}) & \dfrac{viy}{viz} & 0...0 & \dfrac{vix}{viz} & 0...0 \\ (1+\dfrac{viy^2}{viz^2}) & -\dfrac{vix \cdot viy}{viz^2} & -\dfrac{vix}{viz} & 0...0 & \dfrac{viy}{viz} & 0...0 \end{pmatrix} \cdot \begin{pmatrix} \varphi \\ \theta \\ \psi \\ \vdots \\ \delta fsf_i \\ \vdots \end{pmatrix} = J_i \cdot \begin{pmatrix} \varphi \\ \theta \\ \psi \\ \vdots \\ \delta fsf_i \\ \vdots \end{pmatrix}$$

Le cumul des équations associées à l'ensemble des N étoiles permet de construire la matrice jacobienne J, de dimension (2N)x(3+N), et de résoudre le système linéaire par moindres carrés.

Au moins 3 étoiles sont nécessaires pour avoir autant d'équations que d'inconnues.

Comme elle repose sur une modélisation géométrique, on peut s'attendre à ce que cette méthode permette de réduire également toutes les erreurs compatibles avec ce modèle (couplage radial entre axes dans le plan focal).

Cette méthode a toutefois l'inconvénient de nécessiter l'inversion d'une matrice dont la dimension croît avec le nombre d'étoiles observées, soit (3+N)x(3+N).

A partir des hypothèses et des outils décrits ci-dessus, on étudie les effets de ce procédé de détermination de l'attitude, selon la méthode décrite ci-après.

On se limite tout d'abord à un seul cas de configuration des étoiles dans le champ de vue, en pointage inertiel. On valide la signature temporelle en attitude de différentes erreurs au niveau étoile : bruit, méconnaissance de la distance focale au centre du champ, résidu de distorsion, et ce, pour un algorithme d'estimation d'attitude classique.

Puis l'apport d'algorithmes estimant la focale ou la distorsion est mis en évidence.

Enfin, l'intérêt et les limites de l'algorithme avec estimation de distorsion sont évalués au travers d'analyses de robustesse.

Dans un premier temps, l'analyse est menée sur un champ de 12 étoiles dont la répartition dans le champ est illustrée figure 3. On rappelle que les étoiles restent fixes dans le champ de vue tout au long de la simulation.

Dans le but d'identifier les effets des différentes erreurs et de valider l'approche, on examine tout d'abord le comportement de l'algorithme de restitution d'attitude par moindres carrés simple. Les travaux menés sur COROT ont montré que cet algorithme peut être considéré comme un algorithme « classique », il donne des résultats équivalents à ceux obtenus par la méthode QUEST. Les simulations sont menées sur environ 12 600 poses.

On va donc vérifier qu'en pointage inertiel et avec un algorithme classique, l'effet d'un bruit temporel sur la mesure de position des étoiles se traduit bien par un bruit sur l'estimation d'attitude, et que les erreurs dites « champ de vue » se traduisent par un biais.

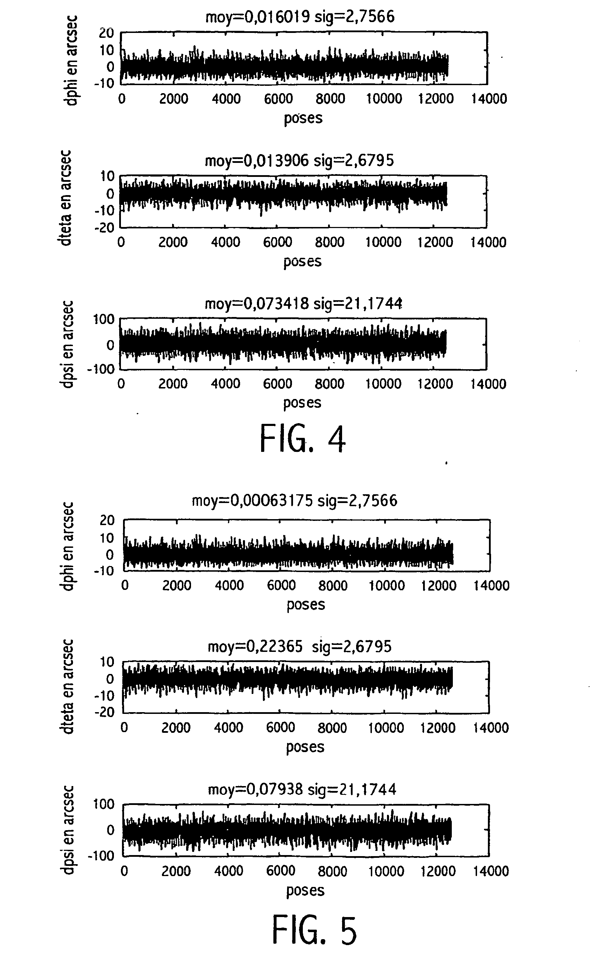

Pour chaque pose les bruits sont tirés suivant une loi gaussienne. L'effet du bruit de mesure seul est illustré par la figure 4. On obtient un bruit en attitude pratiquement centré (moyenne de l'ordre du centième de seconde d'arc), et un écart type sur les axes transverses de l'ordre de 2,7".

En appliquant les facteurs multiplicatifs suivants :

- √12 lié au nombre d'étoiles,
- √2 lié au cumul des deux axes transverses,
- pour passer de 1 à 3 σ,

On retrouve bien 39" soit une valeur proche du bruit de mesure au niveau étoile qui servait d'hypothèse de départ.

Une erreur sur la connaissance de la focale constante est appliquée à toute la simulation. Les résultats sont illustrés par la figure 5. Cela n'affecte pas les écarts types, mais introduit, comme on pouvait s'y attendre en pointage inertiel, un biais perceptible sur l'axe transverse (ici dteta). Le lien entre la valeur u biais et la méconnaissance de la distance focale dépend de la géométrie des étoiles dans le champ.

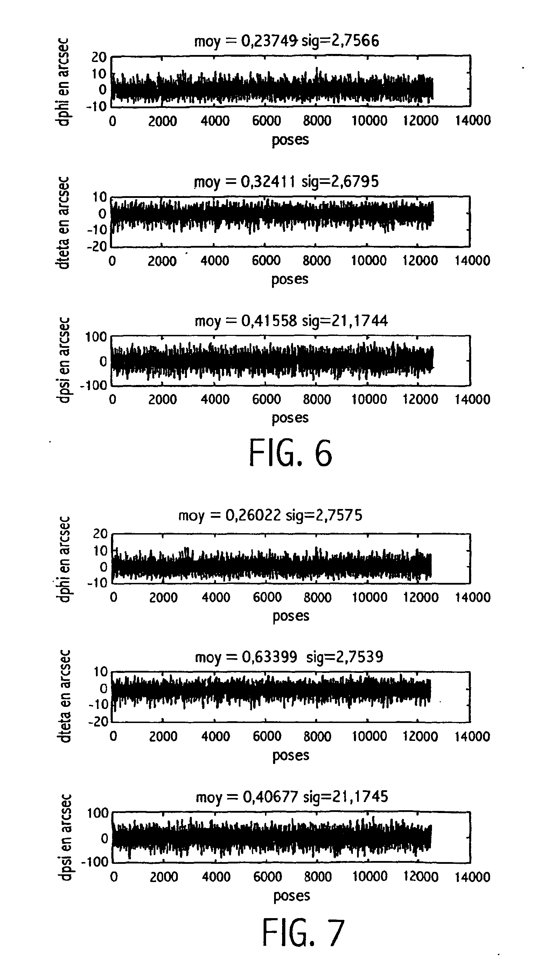

L'effet de la distorsion est illustré par la figure 6. On observe les mêmes écarts types que dans le cas « bruits seuls », mais là encore, comme prévu, on observe des biais relativement importants sur les trois axes, fonction de la distorsion locale à chaque étoile et de la géométrie des étoiles dans le champ.

La figure 7 illustre les résultats de restitution d'attitude avec les mêmes erreurs que précédemment (bruits, méconnaissance de la focale et distorsion, avec tous les tirages reproduits à l'identique), et l'algorithme intégrant la distance focale dans le vecteur des inconnues, décrit précédemment.

Les écarts types sont inchangés, toutefois on observe une évolution des biais, plutôt dans le sens d'une dégradation. Cela est attribué à l'importance relative de la distorsion par rapport à la méconnaissance de la focale dans ce cas de simulation.

La fluctuation thermo élastique de la focale est peu importante en regard du résidu de distorsion, du fait du contrôle relativement précis de l'environnement thermique du senseur. Un tel algorithme offre donc un intérêt mais il serait souhaitable de l'améliorer.

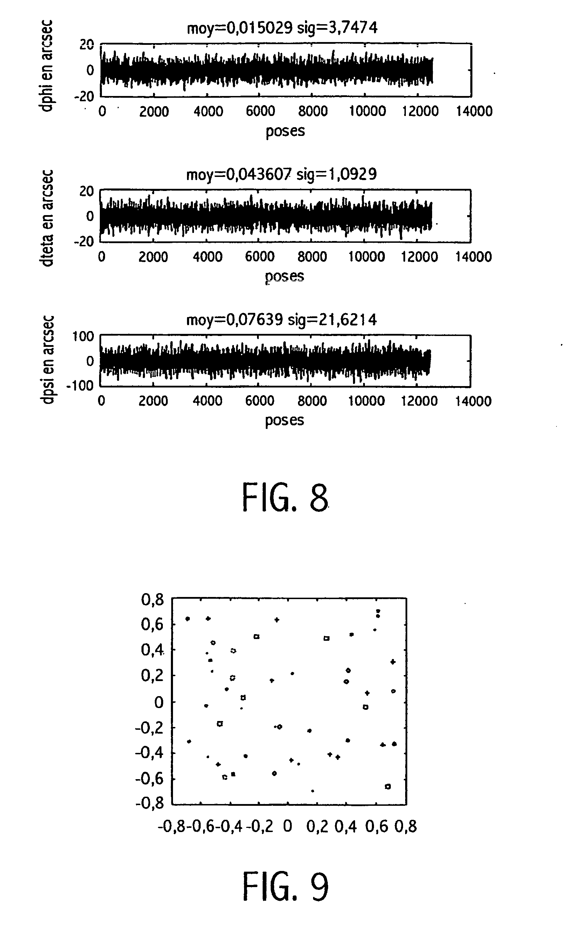

La figure 8 illustre cette fois les effets de l'algorithme avec estimation de distorsion.

On observe une nette diminution des biais par rapport au cas de l'estimation d'attitude seule, ils reviennent à un niveau comparable à celui observé avec des erreurs de type bruit uniquement. Par contre les écarts types sont dégradés, d'un facteur inférieur à 2.

Toutefois, le bruit sur l'estimation d'attitude introduit par les SST est bien filtré par l'estimateur gyrostellaire. Cette approche, qui réduit l'impact des erreurs « FOV » au détriment du bruit a donc un intérêt potentiel indéniable.

Il est souhaitable de multiplier les cas de paysage afin d'apprécier le comportement de l'algorithme en présence de différentes configurations géométriques d'étoiles. Il est ensuite souhaitable d'étudier sa robustesse, notamment :

-     à une erreur de pointage (dans la mesure où la méthode repose sur une linéarisation des équations de mesure autour d'une attitude de consigne),
-     aux hypothèses sur le poids relatif de la distorsion par rapport au bruit de mesure,
-     aux autres sources d'erreur « FOV ».

Les simulations ont été reprises pour 100 cas de configurations géométriques. Pour chaque cas, on tire aléatoirement la position de 10 étoiles dans le champ de vue suivant une loi uniforme, ainsi que le résidu de distorsion associé. Pour diminuer les durées de simulation, on a réduit le nombre de poses sur lequel sont évalués les biais et les écarts types à 6000.

Les 5 premiers cas (distingués par le symbole représentant chaque étoile) sont illustrés par la figure 9.

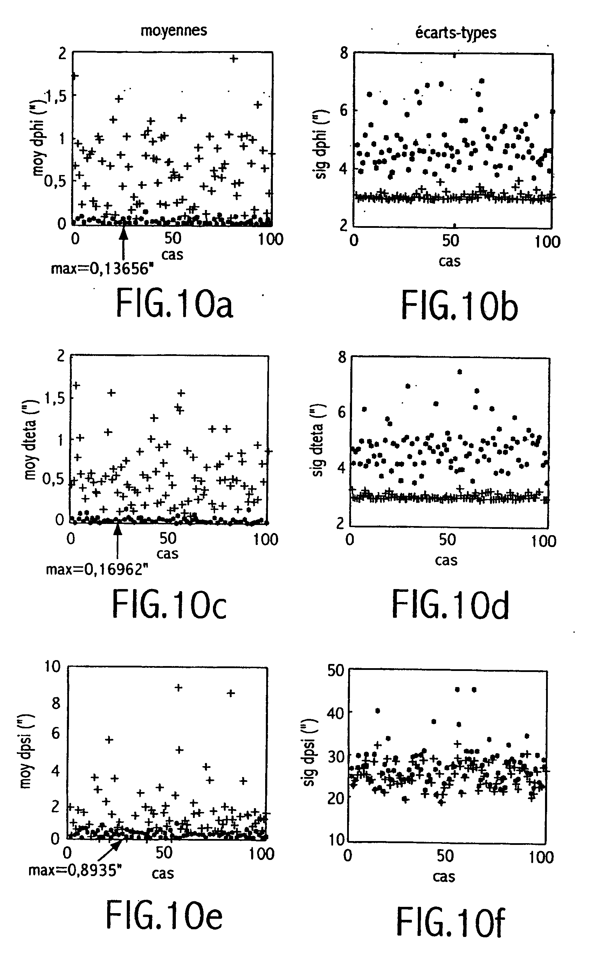

Puis on a comparé les biais et écarts types sur l'attitude restituée avec l'algorithme classique et avec l'algorithme avec estimation de distorsion. Les résultats sont illustrés figure 10, où la valeur maximale du biais obtenu avec l'algorithme estimant la distorsion est indiquée au bas de chaque courbe. Les résultats sont également synthétisés dans le tableau ci-dessous, dans lequel on distingue les effets sur les axes transverses (notés $\perp$) des effets sur l'axe de visée du SST (noté //).

Sur ces figures, les croix représentent les résultats obtenus avec le procédé à moindre carrés simple, et les points représentent les résultats obtenus avec le procédé à moindre carrés obtenus avec estimation de la distorsion (6000 poses, cas nominal).

Dans le cas nominal, on obtient les résultats suivants :

| Valseurs maximales sur 6000 poses en (") | Moyenne axes $\perp$ | Ecart type axes $\perp$ | Moyenne axe // | Ecart type axe // |
|---|---|---|---|---|
| Algorithme classique | 1,8 | 3,5 | 8,0 | 32,5 |
| Algorithme avec estimation de distorsion | 0,2 | 7,8 | 1,0 | 45,0 |

La valeur maximale du biais obtenu avec l'algorithme classique est proche de 2", cohérente avec le pire cas d'erreur « FOV » pris en compte dans des bilans réalisés précédemment avec 3 SST.

Avec l'algorithme estimant la distorsion, on observe une réduction d'un facteur proche de 10 de ce biais par rapport à l'algorithme classique, sur les trois axes de mesure, ce qui prouve l'efficacité de l'algorithme proposé. Par contre, l'écart type du bruit sur les axes transverses est dégradé, d'un facteur inférieur à 2 en moyenne. Les pires cas de dégradation sont corrélés aux pires résultats avec l'algorithme classique et sont donc attribués à la configuration géométrique des étoiles. La dégradation du bruit n'est pas remarquable sur l'axe de visée.

Ces résultats, obtenus dans des configurations géométriques très diversifiées, confirment les conclusions du paragraphe précédent. On vérifie bien que la valeur du biais dépend de la configuration géométrique, ce qui confirme que la variation du paysage dans le champ de vue sous l'effet de la cinématique du satellite introduira une variation temporelle « basse fréquence » de l'erreur de mesure d'attitude. On peut donc s'attendre à une réduction de l'amplitude de l'erreur due au résidu de distorsion dans le cas d'un paysage stellaire défilant. Rappelons que cette méthode s'appuie sur un traitement en ligne des mesures et ne repose sur aucun filtrage.

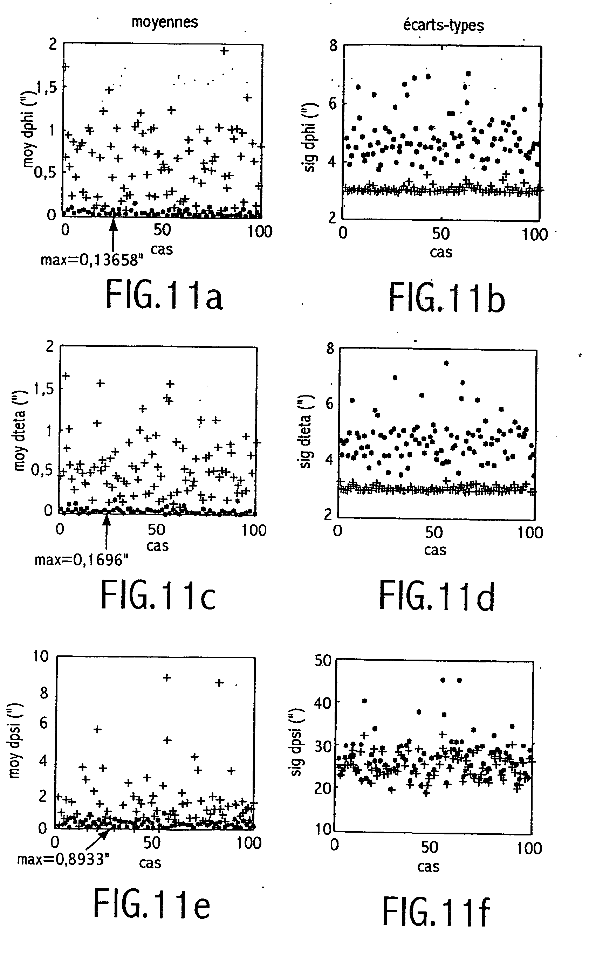

On a pris en compte une erreur de pointage tirée aléatoirement suivant une loi de distribution uniforme dans l'intervalle $\pm$ 500 $\mu$radians sur les trois axes. Le résultat est illustré par la figure 11 (6000 poses avec erreurs de pointage, croix = moindres carrés simples, points = moindres carrés avec estimation de distorsion) et synthétisé dans le tableau ci-dessous.

• Cas avec erreur de pointage

| Valeurs maximales sur 6000 poses en (") | Moyenne axes $\perp$ | Ecart type axes $\perp$ | Moyenne axe // | Ecart type axe // |
|---|---|---|---|---|
| Algorithme classique | 1,8 | 3,5 | 8,5 | 33,0 |
| Algorithme avec estimation de distorsion | 0,2 | 7,5 | 0,9 | 45,0 |

Pour les deux algorithmes, l'ordre de grandeur des biais et des écarts types n'est pas affecté. L'efficacité de l'algorithme avec estimation de distorsion est comparable.

L'algorithme est donc robuste à des erreurs de pointage de l'ordre de grandeur de celles attendues.

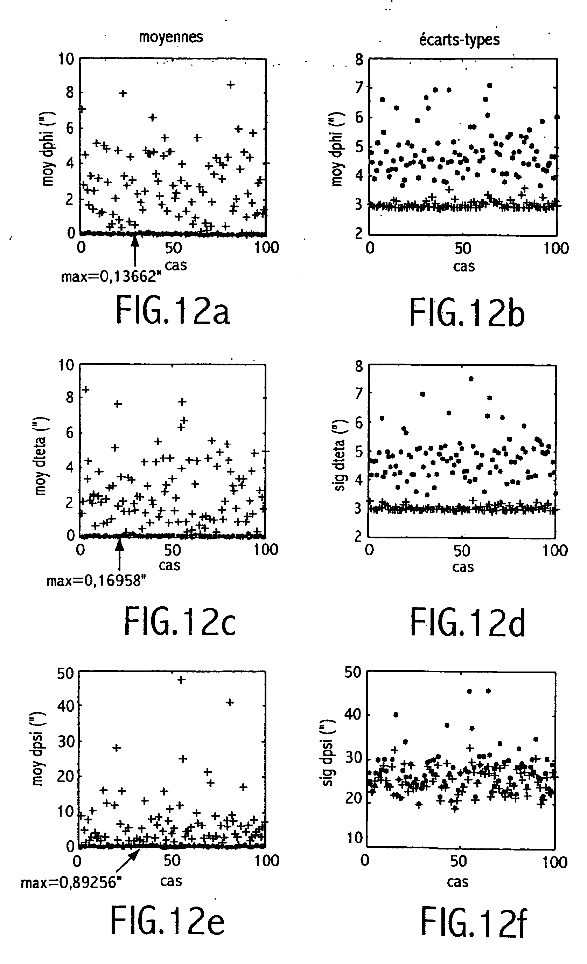

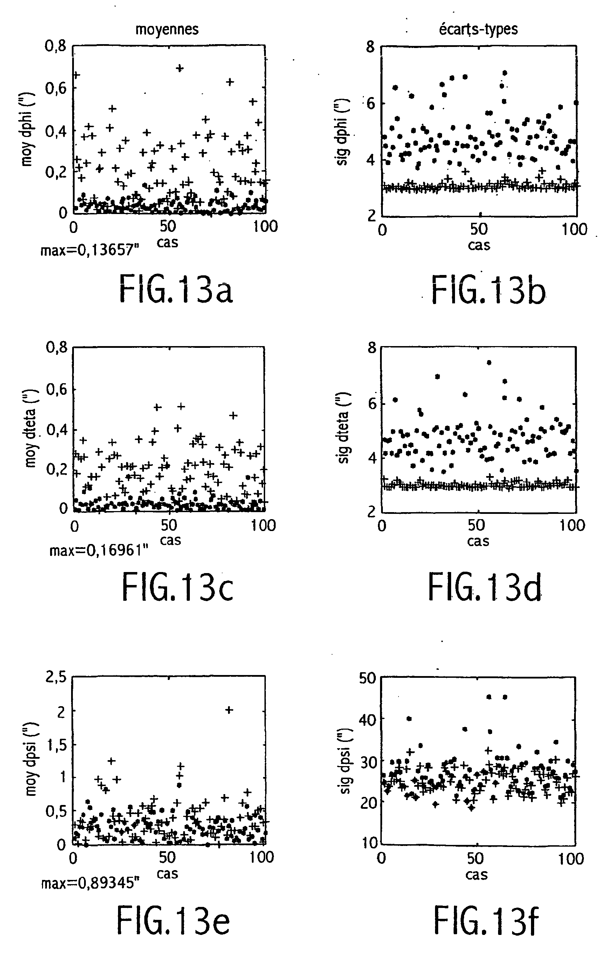

Les simulations ont été reprises avec des hypothèses successivement 5 fois plus fortes puis 5 fois plus faibles sur l'erreur de distorsion, les autres sources d'erreur restant inchangées (bruit, erreur de pointage). Les résultats respectifs sont illustrés par la figure 12 (6000 poses, distorsions X 5, croix = moindres carrés simples, points bleus = moindres carrés avec estimation de distorsion), et la figure 13 (6000 poses, distorsions /5, croix = moindres carrés simples, points = moindres carrés avec estimation de distorsion) et synthétisés dans les tableaux ci-dessous.

• Cas distorsion plus forte :

| Valeurs maximales sur 6000 poses en (") | Moyenne axes $\perp$ | Ecart type axes $\perp$ | Moyenne axe // | Ecart type axe // |
|---|---|---|---|---|
| Algorithme classique | 8,5 | 3,5 | 48,0 | 33,0 |
| Algorithme avec estimation de distorsion | 0,2 | 7,5 | 0,9 | 45,0 |

• Cas distorsion plus faible

| Valeurs maximales sur 6000 poses en (") | Moyenne axes $\perp$ | Ecart type axes $\perp$ | Moyenne axe // | Ecart type axe // |
|---|---|---|---|---|
| Algorithme classique | 0,7 | 3,5 | 2,0 | 33,0 |
| Algorithme avec estimation de distorsion | 0,2 | 7,5 | 0,9 | 45,0 |

Les écart types de l'erreur d'attitude sont insensibles à l'hypothèse sur la distorsion, ils ne dépendent que du bruit de mesure de position d'étoile et de l'algorithme.

La réduction de biais introduite par l'algorithme est d'autant plus importante que l'hypothèse sur la distorsion est forte par rapport au bruit, Il existe donc une limite inférieure du résidu de distorsion par rapport au bruit, en dessous de laquelle l'algorithme estimateur de distorsion ne fait que dégrader le bruit sans améliorer significativement le biais.

La signification géométrique des équations sous-jacentes rend l'algorithme estimateur de distorsion bien adapté à la restitution des erreurs de type radial, c'est-à-dire caractérisées par un couplage radial des deux composantes de la position de l'étoile dans le plan focal. Il importe d'évaluer la robustesse de l'algorithme estimateur de distorsion à des erreurs de répartition géométrique différente.

Il existe, en effet, d'autres sources d'erreur dans la catégorie « FOV » dépendant de l'étoile ou de la position dans le champ : aberrations chromatiques, erreurs catalogue, erreurs d'interpolation. Leur impact sur la mesure d'attitude en pointage inertiel se traduit également par un biais lié à la géométrie des étoiles dans le champ.

L'impact des aberrations chromatiques sur la performance de mesure de la position étoile identifiés dans une revue des senseurs varie beaucoup d'un senseur à l'autre. Il va de 30 à 150% du poste de distorsion duquel il n'est pas toujours clairement dissocié. Au premier ordre, il semble que dans un système optique, les aberrations chromatiques de type axial n'ont pas d'effet sur le barycentre des taches étoiles, et que le chromatisme de type latéral a un effet caractérisé par un couplage radial comme la distorsion. Ceci demande toutefois une confirmation auprès des fabricants de senseur en fonction des concepts optiques retenus.

L'amplitude des erreurs catalogue est évaluée, suivant les fabricants, de négligeable à 10% du résidu de distorsion. Les erreurs associées peuvent être considérées comme distribuées aléatoirement en fonction de l'étoile et sur les deux axes dans le plan focal.

Les erreurs d'interpolation ne sont pas toujours distinguées des autres erreurs « FOV ». On peut supposer qu'elles ont une distribution quelconque dans le plan du détecteur si le pointage inertiel est parfait Ces erreurs sont toutefois source d'un couplage « haute fréquence » entre mesure d'attitude et pointage qui rendent leurs effets délicats à appréhender . Elles sont souvent traitées comme du bruit temporel.

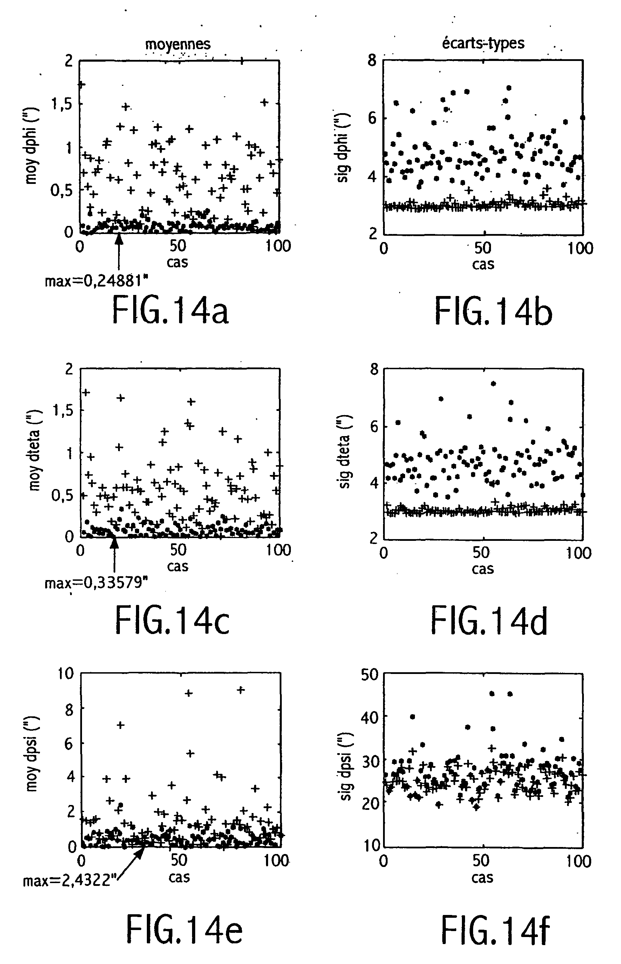

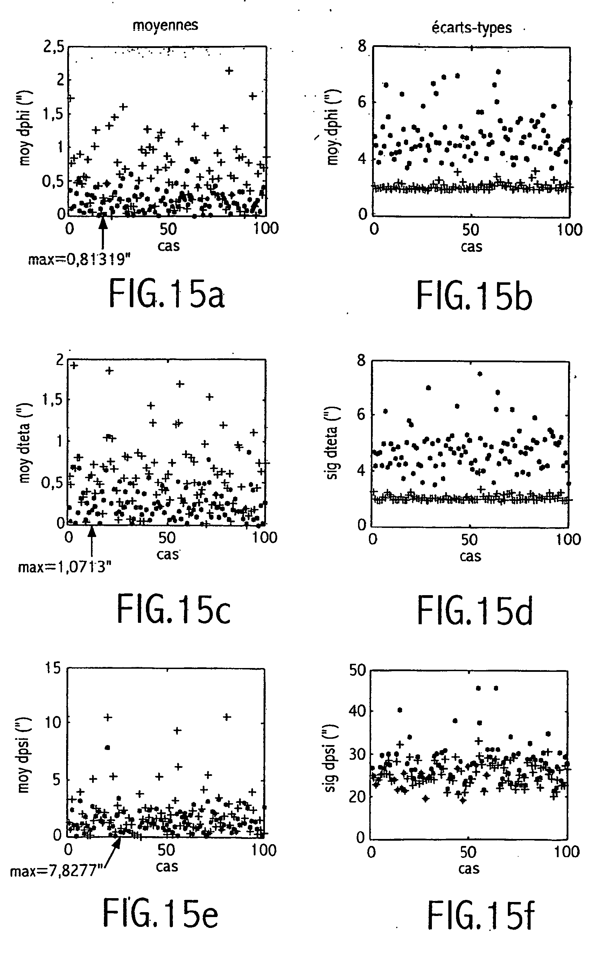

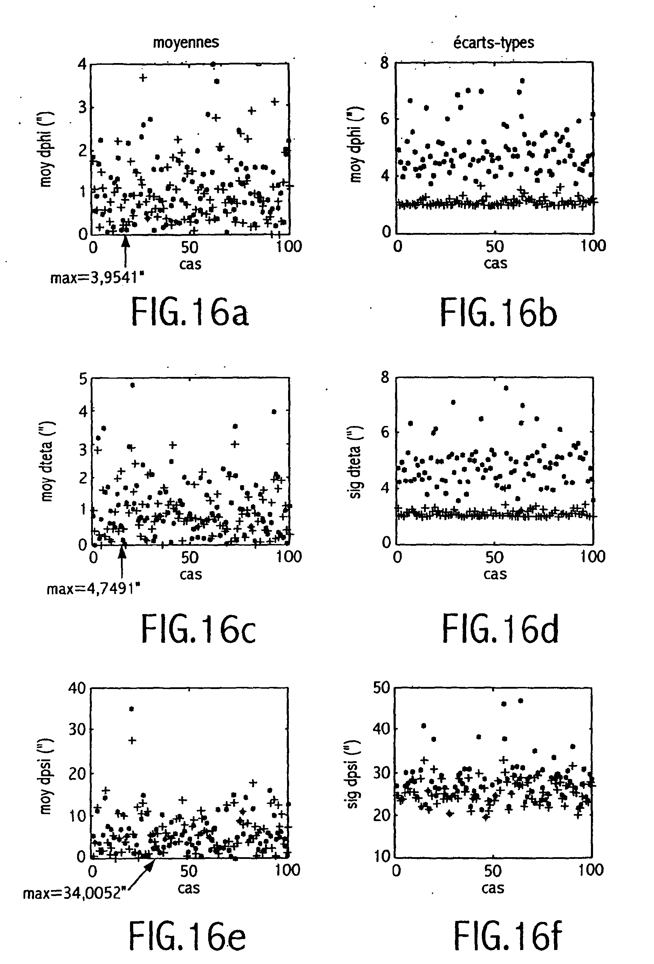

On cherche donc à apprécier la robustesse de l'algorithme à une erreur répartie de manière aléatoire en amplitude et en direction en fonction de chaque étoile. On a utilisé pour cela une fonction de simulation de l'erreur d'interpolation. Dans l'outil de simulation, elle est représentée sous la forme d'une fonction spatiale sinusoïdale de période un pixel sur les deux axes. On a pris en compte plusieurs valeurs de l'amplitude de cette erreur : 0,3", 1" et 5", Les résultats sont illustrés respectivement par la figure 14 (6000 poses, erreurs d'interpolation de 0,3" en amplitude, croix = moindres carrés simples, points = moindres carrés avec estimation de distorsion), la figure 15 (8000 poses, erreur d'interpolation de 1" en amplitude, croix = moindres carrés simples, points = moindres carrés avec estimation de distorsion) et la figure 16 (6000 poses, erreur d'interpolation de 5" en amplitude, croix = moindres carrés simples, points = moindres carrés avec estimation de distorsion), et synthétisés par les tableaux ci-dessous.

• Cas erreur non radiale de 0,3"

| Valeurs maximales sur 6000 poses en (") | Moyenne axes ⊥ | Ecart type axes ⊥ | Moyenne axe // | Ecart type axe // |
|---|---|---|---|---|
| Algorithme classique | 2,0 | 3,5 | 9,0 | 33,0 |
| Algorithme avec estimation de distorsion | 0,3 | 7,0 | 2,5 | 45,0 |

• Cas erreur non radiale de 1"

| Valeurs maximales sur 6000 poses en (") | Moyenne axes ⊥ | Ecart type axes ⊥ | Moyenne axe // | Ecart type axe // |
|---|---|---|---|---|
| Algorithme classique | 2,2 | 3,5 | 10,5 | 33,0 |
| Algorithme avec estimation de distorsion | 1,1 | 7,5 | 7,8 | 45,0 |

• Cas erreur non radiale de 5"

| Valeurs maximales sur 6000 poses en (") | Moyenne axes ⊥ | Ecart type axes ⊥ | Moyenne axe // | Ecart type axe // |
|---|---|---|---|---|
| Algorithme classique | 4,8 | 3,5 | 27,0 | 33,0 |
| Algorithme avec estimation de distorsion | 4,8 | 7,5 | 34,6 | 45,0 |

Les effets d'amplification du bruit introduits par l'algorithme estimateur de distorsion ne sont pas affectés. Mais on constate une perte d'efficacité de la réduction du biais en présence d'erreurs non radiales. Cette réduction n'est plus que d'un facteur 3 en présence d'une erreur non radiale de 0,3", et elle n'est plus perceptible en présence d'une erreur non radiale de 5". On rappelle que l'hypothèse sur le résidu de distorsion est de 9" en bord de champ.

Les performances de l'algorithme sont donc un peu limitées par la présence d'erreurs dont la distribution spatiale n'est pas radiale.

Les simulations exposées ci-avant ont permis de mettre en évidence l'intérêt potentiel d'un algorithme estimant la distorsion d'un senseur stellaire pour réduire l'erreur de mesure d'attitude dite « FOV » qui en découle. La réduction constatée est d'un facteur légèrement inférieur à 10 sur les axes transverses avec les hypothèses adoptées, représentatives d'un senseur typique. Un inconvénient suivant réside dans une augmentation du bruit en attitude d'un facteur proche de 2, dont l'impact peut être atténué par le filtre gyrostellaire.

L'algorithme proposé est simple. Il peut être implanté en ligne dans le traitement des mesures au niveau étoile. Par rapport à un algorithme de restitution d'attitude classique, il implique une augmentation de la taille de la matrice à inverser de façon linéaire avec le nombre d'étoiles à traiter. Il tire bénéfice également, de manière préférentielle, d'une connaissance approchée de l'attitude à mesurer, compatible avec les spécifications de pointage requises.

Du fait des résultats obtenus, l'intérêt de cet algorithme est préférentiellement limité à une certaine amplitude du niveau du bruit par rapport au résidu de distorsion.

Les simulations ont également montré que si cet algorithme permet de réduire l'impact des erreurs « FOV » de distribution radiale dans le champ, son intérêt est plus limité par les sources d'erreur « FOV » de distribution non radiale.

Une appréciation fine de la nature géométrique de toutes les sources d'erreur « FOV » et de leur amplitude est donc souhaitable.

Son intérêt est également présent dans le cadre d'une chaîne complète d'estimation d'attitude gyrostellaire et en tenant compte d'une cinématique réaliste des étoiles dans le champ de vue.

Suite à la description de ce premier procédé de réduction des erreurs de type "champ de vue" par un procédé algorithmique s'appliquant directement au niveau des sorties étoiles, on s'intéresse maintenant à un algorithme basé sur une connaissance de la forme des erreurs "FOV" dans le champ.

On expose ensuite une analyse de cet algorithme qui a été effectuée non seulement en pointage inertiel, mais aussi en prenant en compte des dynamiques satellite simples que l'on rencontre en pointage géocentrique.

Rappelons que dans le procédé exposé ci-avant, les effets de la distorsion se traduisaient directement comme une fluctuation de la distance focale en chaque point du champ. La répartition dans le champ du résidu de distorsion non calibré était une fonction aléatoire suivant une loi uniforme en valeur et en direction dans le plan focal. L'algorithme ne se basait donc sur aucune hypothèse de modélisation des erreurs.

Contrairement aux traitements spécifiées précédemment, on se base maintenant sur le fait qu'on dispose ici d'une hypothèse sur l'évolution du résidu de distorsion dans le champ. Cette hypothèse fondamentale permet d'adapter les algorithmes d'estimation de façon à identifier un, voire plusieurs coefficients caractéristiques de la distorsion et à rendre l'algorithme plus efficace en limitant le nombre de paramètres à estimer.

L'étude sera donc menée de la façon suivante:

- Présentation de la modélisation des erreurs.
- Validation des signatures temporelles pour chacune des erreurs modélisées et mise en évidence de l'intérêt de l'algorithme pour une configuration stellaire donnée en pointage inertiel.
- Description des algorithmes étudiés.
- Etude statistique et performances atteignables en pointage inertiel pour différentes configurations stellaires.
- Etude avec des dynamiques satellite permettant de caractériser les signatures temporelles des erreurs et l'impact sur le fonctionnement des algorithmes proposés. L'outil de simulation n'autorise que des dynamiques simples à vitesse constante. Ceci est suffisant pour simuler des dynamiques rencontrées en pointage géocentrique et évaluer les performances atteignables avec un paysage stellaire défilant.
- Analyse de robustesse du processus.

Le dimensionnement du senseur s'est effectué d'après les données décrite précédemment permettant d'avoir un senseur proche des caractéristiques typiquement souhaitées.

|  |  |
|---|---|
| -Champ de vue: | *28° x 28°* |
| - Focale | *30 cm* |
| - Nombre d'étoiles poursuivies: | *12* |
| - Fréquence: | *4 Hz* |
| - Erreurs de mesure au niveau d'une étoile: | |
| - Bruit: | *37" à 3σ* |
| - Résidu de distorsion : | *9" à 3σ* |

D'autres défauts étaient également proposés:

- Fluctuation de la distance focale: *1.5"/ °K* en bord de champ avec une stabilité de l'environnement thermique de $\pm$ *2°C*
- Aberration chromatique : *3" à 3σ*
- Erreurs catalogue : *0.3" à 3σ*

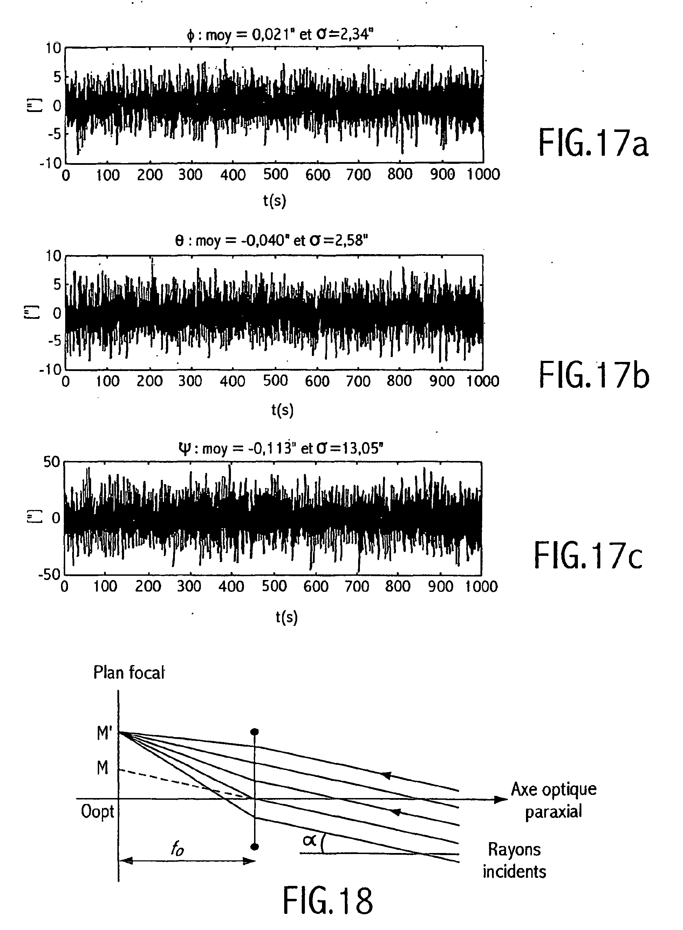

En ce qui concerne le bruit blanc, il s'agit du bruit de mesure dont la variance est modélisée comme constante dans le temps.
Pour des raisons de simplification, il contient les erreurs d'interpolation qui peuvent être considérées comme des bruits blancs.
On prendra un bruit blanc égal à *37" à 3σ* sur chaque axe de mesure X et Y.
On a tracé sur la figure 17 les sorties temporelles de l'attitude calculée au moyen d'un filtrage classique à partir des mesures bruitées.
On obtient un bruit pratiquement centré (la moyenne dépend du nombre de poses c'est à dire du temps de simulation et de la fréquence des mesure) et un écart type sur les axes transverses de l'ordre de 2.5".
Si on applique les facteurs multiplicatifs correspondant :

- au nombre d'étoiles : $\sqrt{12}$

- au cumul des deux axes transverses : $\sqrt{2}$

- au passage de 1 à 3σ

on retrouve les 37" du bruit de mesure injecté au niveau étoile.
La distorsion est une aberration fonction de la position du point objet dans le champ. Elle n'affecte pas la qualité de l'image d'un point, mais uniquement sa position comme le montre la figure 18.
Les rayons provenant d'une étoile avec un angle α convergent en un point M' au plan focal et non au point M comme dans un cas d'un instrument sans distorsion.
Cette aberration est due à la qualité de la forme de la lentille. Dans le cas de la figure ci-dessus, la distorsion est une fonction croissante au plan focal, c'est à dire : $O_{opt}M' > O_{opt}M$. Signalons toutefois que la distorsion peut également être décroissante.
Bien que les figures de distorsion puissent prendre parfois des formes complexes, avec une distorsion non monotone dans le champ, la distorsion se modélise suivant une loi radiale (distance du point à l'axe optique) de la façon suivante:
On définit les deux grandeurs suivantes :

$$r = O_{opt}M = f_0 \tan \alpha$$

$r' = O_{opt}M'$ déterminé par tracé de rayons (code optique).
On interpole la relation liant r à r' sous la forme polynomiale suivante :

$$r' = r (1 + D_3 r^2 + D_4 r^3 + D_5 r^4 + D_6 r^5 + D_7 r^6 \dots) = p(r)$$

Le degré du polynôme *p(r)* est fonction de la précision souhaitée.

La connaissance des coefficient polynomiaux *(D₃, D₄, D₅, D₆, D₇ ...)* permet de calculer en tout point du champ la contribution de l'erreur due à la distorsion est de la corriger si besoin est.

En général, pour des systèmes optiques de révolution, des considérations de symétrie permettent d'affirmer que les coefficients pairs *(D₄, D₆, ...)* sont nuls. Dans la suite de l'étude, nous nous placerons dans cette hypothèse qui n'enlève rien à la généralité de l'étude soit:

$$r'=r\,(1 + D_3\,r^2 + D_5\,r^4 + D_7\,r^6 \ldots) = p(\,r\,)$$

Sur les senseurs stellaires, des processus d'étalonnage sont mis en oeuvre de façon à réduire l'impact de la distorsion. Les traitements permettent de prendre en compte le coefficient $D_3$ et de réduire les erreurs liées à ce défaut.

Nous supposerons la distorsion étalonnée au 3ème ordre. Dans ce cas, les erreurs radiales dues au résidu de distorsion peuvent se modéliser de la façon suivante:

$$r'=r\,(1 + D_5\,r^4 + D_7\,r^6)$$

Il n'est cependant pas exclu, si nécessaire, de prendre en compte une erreur d'estimation du coefficient $D_3$.

Pour cette étude on a pris uniquement un coefficient $D_5 = 6$ m$^{-4}$ estimé comme suit afin de représenter les performances d'un senseur stellaire typique.

Afin de se ramener à des valeurs de fluctuation de la focale en bord de champ telle qu'elle est définie en [1], on calcule la "focale apparente" $f$ en bord de champ:

On a: $\tan\alpha = \dfrac{r}{f}$

en nominal.

Si on considère la distorsion comme une variation de la focale, on peut écrire la relation suivante:

$$\tan\alpha = \frac{r'}{f'}$$

en présence de distorsion.

D'où:

$$f' = \frac{r'}{r}\cdot f = \left(1 + D_5 r^4\right)\cdot f$$

Il ressort donc que l'estimation du rayon déplacé r' consiste directement à calculer la distance focale déformée f et que la démarche d'estimation de r' consiste en soi à estimer f :

En bord de champ,

$$r = f\cdot\tan\!\left(\frac{FOV}{2}\right) = 0.3\cdot\tan(14°) = 0.0747\,m$$

D'où :

$$f' = 0.300056\,m$$

Ce qui représente une fluctuation approximative de la focale en bord de champ de: 56 $\mu$m qui nous rapproche des niveaux étudiées dans [1] où elle était de 60$\mu$m.

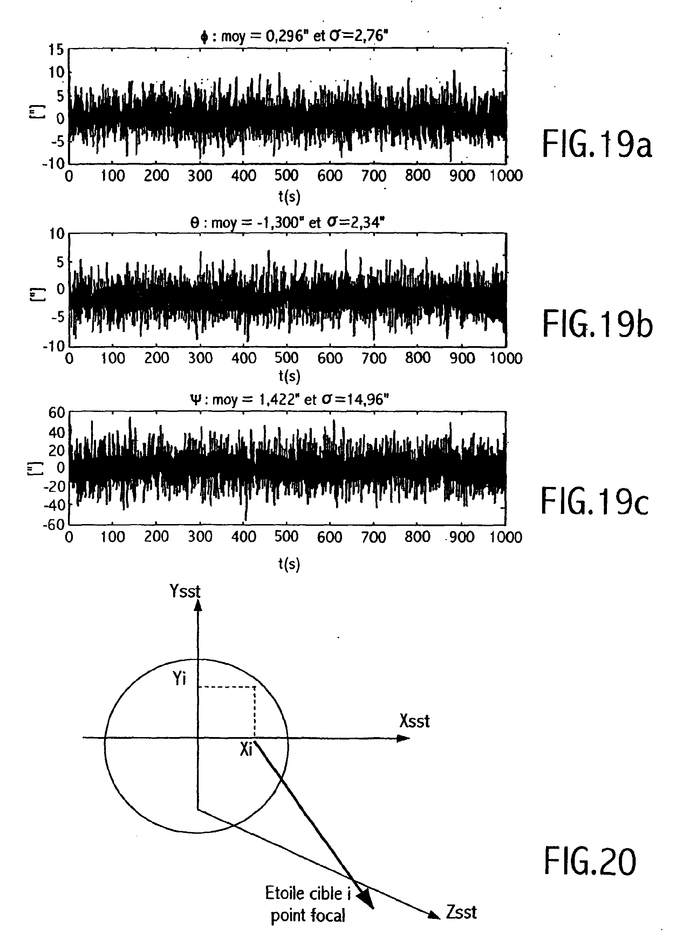

On a tracé sur la figure 19 les courbes temporelles correspondant à l'écart d'attitude estimé au moyen des mesures distordues et bruitées avec un filtrage classique en pointage inertiel.

On observe des signaux bruités mais biaisés. Ce biais est différent suivant les axes.

0,3" pou $\varphi$, 1.3" pour $\theta$ (axes transverses) et 1.4" pour $\psi$.

En revanche, les écarts types restent inchangés par rapport aux sorties avec bruit seul.

Ces biais sont dus à la distorsion. La valeur de ces biais dépend uniquement de la configuration stellaire et reste constante dans le temps pour un pointage inertiel.

Notons que pour un pointage géocentrique, la valeur de ces biais évolue dans le temps puisque le paysage stellaire est modifié à chaque instant. Une étude sera faite au § 0sur l'évolution temporelle de ces biais en paysage stellaire défilant.

L'objectif des traitements décrits dans cette note consiste à éliminer ces biais, par des algorithmes prenant en compte des caractéristiques déterministes de la distorsion.

En effet, les biais de mesure SST ne sont pas filtrés par un processus d'hybridation gyro-stellaire et se traduisent par des erreurs d'attitude très pénalisantes dans un bilan de localisation.

L'algorithme proposé maintenant s'applique directement à la mesure $(x_i, y_i)$ fournie par le CCD correspondant aux coordonnées de la tache relatives à chaque étoile cible.

On définit le repère du senseur stellaire de la façon suivante (cf. figure 20) :

- $X_{SST}$ et $Y_{SST}$ définissent le plan focal ou est placé le détecteur.
- $Z_{SST}$ est normal à ce plan dirigé vers l'espace.

Les algorithmes d'estimation d'attitude présentés ci dessous se basent sur l'exploitation des vecteurs directeurs des différentes étoiles cibles exprimés dans deux repères distincts: le repère de consigne et le repère vrai.

Le repère de consigne $Rc$ du senseur, est tel que dans ce repère les directions des étoiles cibles sont confondues avec les vecteurs $Vi$.

A chaque instant, le repère de consigne est connu et chaque étoile cible i se projette dans le plan du détecteur en un point de coordonnées: $(xi, yi)$.

Ainsi, le vecteur unitaire correspondant s'écrit:

$$[Vi] = \left( \frac{1}{\sqrt{x_i^2 + y_i^2 + f^2}} \begin{bmatrix} x_i \\ y_i \\ -f \end{bmatrix} \right) = \begin{bmatrix} v_{ix} \\ v_{iy} \\ v_{iz} \end{bmatrix}$$

on a:

$$\frac{v_{ix}}{v_{iz}} = -\frac{x_i}{f} \quad \text{et} \quad \frac{v_{iy}}{v_{iz}} = -\frac{y_i}{f}$$

Le repère réel $Rs$ du senseur est tel que les directions des étoiles cibles en repère senseur deviennent les vecteurs $Wi$.

$$[Wi] = \left( \frac{1}{\sqrt{x_{mi}^2 + y_{mi}^2 + f^2}} \begin{bmatrix} x_{mi} \\ y_{mi} \\ -f \end{bmatrix}_i \right) = \begin{bmatrix} w_{mix} \\ w_{miy} \\ w_{miz} \end{bmatrix}$$

on a:

$$\frac{w_{mix}}{w_{miz}} = -\frac{x_{mi}}{f} \quad \text{et} \quad \frac{w_{miy}}{w_{miz}} = -\frac{y_{mi}}{f}$$

L'écart entre ces deux grandeurs représente l'écart d'attitude entre le repère de consigne et le repère satellite.

En considérant cet écart "petit", on linéarise les équations autour de l'attitude de consigne. On a la relation matricielle suivante:

$$W_i \approx \begin{bmatrix} 1 & \psi & -\theta \\ -\psi & 1 & \varphi \\ \theta & -\varphi & 1 \end{bmatrix} \cdot V_i$$

c'est à dire:

$$\begin{cases} w_{mix} = v_{ix} & -\theta \cdot v_{iz} + \psi \cdot v_{iy} \\ w_{miy} = v_{iy} + \varphi \cdot v_{iz} & -\psi \cdot v_{ix} \\ w_{miz} = v_{iz} - \varphi \cdot v_{iy} + \theta \cdot v_{ix} \end{cases}$$

soit:

$$-\frac{x_{mi}}{f} = \frac{w_{mix}}{w_{miz}} = \frac{v_{ix} + \psi \cdot v_{iy} - \theta \cdot v_{iz}}{v_{iz} + \theta \cdot v_{ix} - \varphi \cdot v_{iy}} \approx \frac{v_{ix}}{v_{iz}} + \varphi \cdot \frac{v_{ix} \cdot v_{iy}}{v_{iz}^2} - \theta \cdot \left(1 + \frac{v_{ix}^2}{v_{iz}^2}\right) + \psi \cdot \frac{v_{iy}}{v_{iz}}$$

$$-\frac{y_{mi}}{f} = \frac{w_{miy}}{w_{miz}} = \frac{v_{iy} - \psi \cdot v_{ix} - \varphi \cdot v_{iz}}{v_{iz} + \theta \cdot v_{ix} - \varphi \cdot v_{iy}} \approx \frac{v_{iy}}{v_{iz}} + \varphi \cdot \left(1 + \frac{v_{iy}^2}{v_{iz}^2}\right) - \theta \cdot \frac{v_{ix} \cdot v_{iy}}{v_{iz}^2} - \psi \cdot \frac{v_{ix}}{v_{iz}}$$

On peut alors écrire pour chaque étoile cible *i*:

$$\Delta_i = \begin{bmatrix} \dfrac{x_i - x_{mi}}{f} \\ \dfrac{y_i - y_{mi}}{f} \end{bmatrix} = Ji \cdot \begin{bmatrix} \varphi \\ \theta \\ \psi \end{bmatrix}$$

Avec:

$$J_i = \begin{bmatrix} \dfrac{v_{ix} \cdot v_{iy}}{v_{iz}^2} & -\left(1 + \dfrac{v_{ix}^2}{v_{iz}^2}\right) & \dfrac{v_{iy}}{v_{iz}} \\ \left(1 + \dfrac{v_{iy}^2}{v_{iz}^2}\right) & -\dfrac{v_{ix} \cdot v_{iy}}{v_{iz}^2} & -\dfrac{v_{ix}}{v_{iz}} \end{bmatrix}$$

L'équation du système global (plusieurs étoiles cibles) s'écrit sous la forme: $\Delta = J \cdot X \cdot$ où $J = \begin{bmatrix} J_1 \\ \vdots \\ J_n \end{bmatrix}$ est la

Jacobienne de taille [*2 nb_étoeiles_cibles,*

$nb\_états$] $\Delta = \begin{bmatrix} \Delta_1 \\ \vdots \\ \Delta_n \end{bmatrix}$ est le vecteur d'observation de taille $2$

$nb\_étoiles\_cibles$

$X$ est l'état à estimer.

La solution par moindre carrés du système d'équations ci dessus est donnée directement par la relation matricielle suivante:

$$X = \left( J^T \cdot J \right)^{-1} \cdot \left( J^T \cdot \Delta \right)$$

L'inversion de $J^T \cdot J$ se fait de façon simple lorsque le nombre d'états est faible. (typiquement 3 ou 4). En revanche, lorsque le nombre d'états est important (cf. algorithme d'estimation de la focale), les calculs peuvent s'avérer assez lourds.

L'estimation par un moindre carrés classique conduit à cette matrice $J_i$ établie précédemment.

$$J_i = \begin{bmatrix} \dfrac{v_{ix} \cdot v_{iy}}{v_{iz}^2} & -\left(1 + \dfrac{v_{ix}^2}{v_{iz}^2}\right) & \dfrac{v_{iy}}{v_{iz}} \\ \left(1 + \dfrac{v_{iy}^2}{v_{iz}^2}\right) & -\dfrac{v_{ix} \cdot v_{iy}}{v_{iz}^2} & -\dfrac{v_{ix}}{v_{iz}} \end{bmatrix} \text{ de taille } [2,3]$$

On s'appuie maintenant sur l'algorithme proposé pour le procédé exposé en première partie de la description.

Si on considère que la distorsion est une dispersion de la distance focale dans le champ de vue (généralement comme une fonction croissante de la distance au centre du champ) ,on associe à chaque étoile une valeur locale de la distance focale $f_i$, définie de la façon suivante:

$$f_i = f_{ref}(1 + \delta f_i)$$

La résolution du système consiste alors à estimer l'écart d'attitude ainsi que les écarts de focale $\delta f_i$ pour chaque étoile cible.

Ceci permet d'établir la matrice $J_i$ ( cf [1]) relative à l'étoile cible i:

$$J_i = \begin{bmatrix} \dfrac{v_{ix} \cdot v_{iy}}{v_{iz}^2} & -\left(1 + \dfrac{v_{ix}^2}{v_{iz}^2}\right) & \dfrac{v_{iy}}{v_{iz}} & 0...0 & \dfrac{v_{ix}}{v_{iz}} & 0..0 \\ \left(1 + \dfrac{v_{iy}^2}{v_{iz}^2}\right) & -\dfrac{v_{ix} \cdot v_{iy}}{v_{iz}^2} & -\dfrac{v_{ix}}{v_{iz}} & 0...0 & \dfrac{v_{iy}}{v_{iz}} & 0..0 \end{bmatrix}$$

de taille

$[2,nb\_étoiles\_cibles]$

Contrairement à l'algorithme estimant les coefficient d'un modèle de distorsion, cet algorithme ne fait aucune hypothèse sur l'évolution de la distance focale dans le champ. Certes, considérer la distorsion comme une variation de la distance focale permet de considérer des erreurs radiales mais sans aucune hypothèse supplémentaire sur l'évolution du résidu de distorsion dans le champ.

L'algorithme ci dessus estime $3 + nb\_etoiles\_cibles$ paramètres. Chaque étoile cible fournissant 2 équations, cet algorithme peut être mis en place lorsque:

*2 nb_etoiles_cibles ≥ 3 + nb_etoiles_cibles,* soit lorsque nb_etoiles_cibles ≥ 3.

Par ailleurs l'inversion matricielle nécessaire à la résolution du système fait intervenir une matrice de la taille de l'état soit *nb_étoiles_cibes* qui peut être source de difficultés si le nombre d'étoiles cibles est élevé (typiquement une dizaine).

Remarquons que pour un même nombre d'équations de mesure, il faut s'attendre à ce que le bruit d'état soit plus élevé pour cet algorithme que pour les 2 premiers. En effet, le nombre d'états étant plus élevé, la proportion d'équations de mesures dédié à l'estimation de chacun des états est plus faible.

Si on veut corriger les erreurs de distorsion, il suffit d'estimer les coefficients polynomiaux caractérisant la distorsion.

On écrit pour cela les équations en tenant compte des coordonnées distordues afin de faire apparaître explicitement ces coefficients.

On a:

$$x'_i = \frac{r'}{r} x_i = \left(1 + D_3 r^2 + D_5 r^4 + D_7 r^6 + ...\right) \cdot x_i$$

$$y'_i = \frac{r'}{r} y_i = \left(1 + D_3 r^2 + D_5 r^4 + D_7 r^6 + ...\right) \cdot y_i$$

où

$$r = \sqrt{x_i^2 + y_i^2}$$

$x_i$ et $y_i$ sont connus. Ce sont les coordonnées de consigne non distordues.

$x'_i$ et $y'_i$ sont les coordonnées calculées avec la distorsion.

On a:

$$\frac{v'_{ix}}{v'_{iz}} = \frac{r'}{r} \frac{v_{ix}}{v_{iz}} \quad \text{et} \quad \frac{v'_{iy}}{v'_{iz}} = \frac{r'}{r} \frac{v_{iy}}{v_{iz}}$$

Afin de connaître les erreurs d'attitude on compare :

- $[x'_{mi} ; y'_{mi}]$ : coordonnées de l'étoile cible données par la mesure distordue dans le repère satellite
- $[x'_i;y'_i]$ : coordonnées distordues de l'étoile cible exprimées à l'aide du modèle de distorsion en fonction de $[x_i;y_i]$, coordonnées de l'étoile cible dans le repère de consigne.

On écrit la relation suivante, traduisant la linéarisation de la matrice de changement de repère :

$$-\frac{x'_{mi}}{f} \approx \frac{v'_{ix}}{v'_{iz}} + \varphi \cdot \frac{v'_{ix} \cdot v'_{iy}}{v'^2_{iz}} - \theta \cdot \left(1 + \frac{v'^2_{ix}}{v'^2_{iz}}\right) + \psi \cdot \frac{v'_{iy}}{v'_{iz}}$$

$$-\frac{y'_{mi}}{f} \approx \frac{v'_{iy}}{v'_{iz}} + \varphi \cdot \left(1 + \frac{v'^2_{iy}}{v'^2_{iz}}\right) - \theta \cdot \frac{v'_{ix} \cdot v'_{iy}}{v'^2_{iz}} - \psi \cdot \frac{v'_{ix}}{v'_{iz}}$$

C'est à dire:

$$-\frac{x'_{mi}}{f} \approx \frac{r'}{r}\frac{v_{ix}}{v_{iz}} + \varphi \cdot \frac{r'^2}{r^2}\frac{v_{ix}\cdot v_{iy}}{v_{iz}^2} - \theta \cdot \left(1 + \frac{r'^2}{r^2}\frac{v_{ix}^2}{v_{iz}^2}\right) + \psi \cdot \frac{r'}{r}\frac{v_{iy}}{v_{iz}}$$

$$-\frac{y'_{mi}}{f} \approx \frac{r'}{r}\frac{v_{iy}}{v_{iz}} + \varphi \cdot \left(1 + \frac{r'^2}{r^2}\frac{v_{iy}^2}{v_{iz}^2}\right) - \theta \cdot \frac{r'^2}{r^2}\frac{v_{ix}\cdot v_{iy}}{v_{iz}^2} - \psi \cdot \frac{r'}{r}\frac{v_{ix}}{v_{iz}}$$

avec

$$\frac{r'}{r} = \left(1 + D_3 r^2 + D_5 r^4 + D_7 r^6 + \ldots\right)$$

D'où, après linéarisation :

$$-\frac{x'_{mi}}{f} \approx \frac{v_{ix}}{v_{iz}} + \varphi \cdot \frac{v_{ix}\cdot v_{iy}}{v_{iz}^2} - \theta \cdot \left(1 + \frac{v_{ix}^2}{v_{iz}^2}\right) + \psi \cdot \frac{v_{iy}}{v_{iz}} + \left(D_3 r^2 + D_5 r^4 + D_7 r^6 + \ldots\right)\cdot \frac{v_{ix}}{v_{iz}}$$

$$-\frac{y'_{mi}}{f} \approx \frac{v_{iy}}{v_{iz}} + \varphi \cdot \left(1 + \frac{v_{iy}^2}{v_{iz}^2}\right) - \theta \cdot \frac{v_{ix}\cdot v_{iy}}{v_{iz}^2} - \psi \cdot \frac{v_{ix}}{v_{iz}} + \left(D_3 r^2 + D_5 r^4 + D_7 r^6 + \ldots\right)\cdot \frac{v_{iy}}{v_{iz}}$$

On en déduit la matrice $Ji$ correspondante:

$$J_i = \begin{bmatrix} \dfrac{v_{ix}\cdot v_{iy}}{v_{iz}^2} & -\left(1 + \dfrac{v_{ix}^2}{v_{iz}^2}\right) & \dfrac{v_{iy}}{v_{iz}} & r^2\cdot\dfrac{v_{ix}}{v_{iz}} & r^4\cdot\dfrac{v_{ix}}{v_{iz}} & r^6\cdot\dfrac{v_{ix}}{v_{iz}} \\ \left(1 + \dfrac{v_{iy}^2}{v_{iz}^2}\right) & -\dfrac{v_{ix}\cdot v_{iy}}{v_{iz}^2} & -\dfrac{v_{ix}}{v_{iz}} & r^2\cdot\dfrac{v_{iy}}{v_{iz}} & r^4\cdot\dfrac{v_{iy}}{v_{iz}} & r^6\cdot\dfrac{v_{iy}}{v_{iz}} \end{bmatrix} \cdots$$

de taille [$2, 3+Ncoef$]

Cette matrice permet d'estimer ($3 + Ncoef$) états: [$\varphi$ $\theta$ $\psi$ $D_3$ $D_5$ $D_7$ ...]

Chaque étoile cible fournissant 2 équations, cet algorithme (ainsi que le précédent) peut être mis en place dès que le nombre d'étoiles cibles est supérieur à $\dfrac{3 + Ncoef}{2}$.

La méthode développée ci-dessus traite d'un cas assez général permettant de calculer plusieurs coefficients de distorsion. Dans la pratique, le coefficient $D_3$ est connu (par étalonnage), et on cherche à estimer le $D_5$ (voire le $D_7$). Dans ce cas, tous les termes en $D_3$ sont passés au premier membre. On pourrait cependant prendre en considération une erreur d'estimation du $D_3$, et passer ce terme au premier membre.

Pour chacune des simulations on applique chacun des trois algorithmes d'estimation pour différentes configurations stellaires. Ceci permet de comparer leurs performances.

Dans chacune des figures présentées ci dessus nous avons adopté la légende suivante:

* : Algorithme classique (noté "classique" dans les tableaux)
+ : Algorithme avec estimation des coefficients d'un modèle de distorsion
(noté "distorsion" dans les tableaux)
$\Delta$ : Algorithme avec estimation des focales locales à chaque étoile
(noté "focale" dans les tableaux)

On effectue une simulation temporelle sur une certaine durée pour chaque configuration stellaire.

On en déduit les sorties temporelles des écarts d'attitude $\varphi^k$ (t),$\theta^k$ (t),$\psi^k$ (t) pour chacune des stratégies de filtrage. On note $\overline{\varphi}^{k"}$, $\overline{\theta}^k$, $\overline{\psi}^k$ leur moyenne temporelle et $\sigma^k(\varphi),\sigma^k(\theta),\sigma^k(\psi)$ leur écart type.

On calcule alors:

$\overline{\varphi}$ *max:* valeur maximale sur l'ensemble des configurations des moyennes temporelles.

$\overline{\varphi}$ *moy*: valeur moyenne sur l'ensemble des configurations des moyennes temporelles .

$\sigma(\overline{\varphi})$: écart type sur l'ensemble des configurations des valeurs moyennes

$\sigma(\varphi)$ *max* Valeur maximale des écarts type de $\varphi(t)$ sur l'ensembles des configurations

$\sigma(\varphi)$ *moy:* Valeur moyenne des écarts type de $\varphi(t)$ sur l'ensembles des configurations

Chaque configuration stellaire est tirée de manière aléatoire. Dans le cas d'un pointage inertiel, cette configuration reste inchangée alors qu'elle évolue en pointage géocentrique suivant la dynamique choisie. La densité stellaire est calculée de façon à ce que le senseur ait toujours 12 étoiles dans son champ de vue.

Rappelons que la distorsion modélisée dans les simulations permettant de générer des mesures étoiles, est bien conforme au modèle en $D_3$, $D_5$.

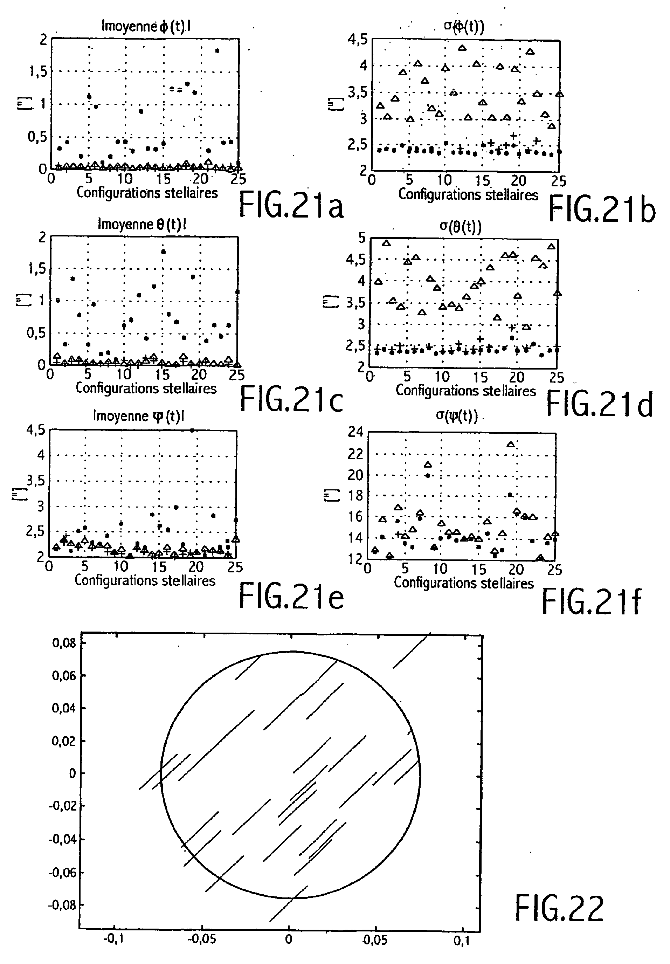

On a tracé sur la figure 21 les résultats obtenus avec les trois algorithmes pour 25 configurations stellaires sur une durée de 1000 s. (Rappelons que le senseur fournit des données à 4 Hz, donc ces simulations correspondent à 4000 poses).

On a regroupé certains résultats significatifs sur les tableaux ci dessous:

Valeurs concernant les valeurs moyennes des attitudes:

| | $\overline{\varphi}$ max | $\overline{\varphi}$ moy | $\sigma(\overline{\varphi})$ | $\overline{\theta}$ max | $\overline{\theta}$ moy | $\sigma(\overline{\theta})$ | $\overline{\psi}$ max | $\overline{\psi}$ moy | $\sigma(\overline{\psi})$ |
|---|---|---|---|---|---|---|---|---|---|
| *1- Classique* | 1.823 | 0.253 | 0. 725 | 1.762 | 0.253 | 0.796 | 2.496 | 0.040 | 0.61 |
| *2- Distorsion* | 0.058 | 0.011 | 0. 029 | 0.108 | 0.003 | 0.041 | 0.302 | 0.026 | 0,15 |
| *3- Focale* | 0.111 | 0.010 | 0.042 | 0.128 | 0.005 | 0.057 | 0.336 | 0.027 | 0.17 |

On retrouve les résultats présentés précédemment sen rapport à la première variante de l'invention, à savoir un bon filtrage des erreurs statiques (biais) dues à la distorsion:

Ainsi par exemple, pour l'angle $\varphi$ et pour le filtrage estimant la distorsion:

- l'erreur moyenne maximale passe de *1.8″* à *0.06″*.

- sur l'ensemble des 25 configurations aléatoires, l'erreur moyenne qui est de *0.25″* passe à *0.01″* avec une dispersion qui passe de *0,72″* à *0.029″*. Valeurs concernant les écarts types :

| | $\varphi$ | | $\theta$ | | $\psi$ | |
|---|---|---|---|---|---|---|
| | σ max | σ moy | σ max | σ moy | σ max | σ moy |
| *1- Classique* | 2.527 | 2.388 | 2.670 | 2.390 | 19.949 | 94.270 |
| *2- Distorsion* | 2.692 | 2.437 | 2.928 | 2.454 | 19.980 | 14.280 |
| *3- Focale* | 4.331 | 3.490 | 4.870 | 3.932 | 22.914 | 15.141 |

Nous notons de meilleurs résultats avec l'algorithme estimant les coefficients du modèle de distorsion, qui contrairement à l'algorithme estimant les distances focales locales, ne provoque qu'une très faible augmentation du niveau de bruit, et ce pour les trois axes.

En fait, en pointage inertiel, on peut considérer au premier ordre que l'estimation d'attitude est entachée d'un biais statique (du à la distorsion) et d'un bruit blanc (du au bruit de mesure).

L'algorithme de filtrage de la distorsion permet d'atténuer les erreurs statiques sans augmenter le bruit de mesure.

On présente maintenant des résultats obtenus avec un paysage défilant.

Il s'agit d'évaluer l'impact du défilement du paysage stellaire sur les performances d'estimation. Les simulations consistent à déplacer les étoiles dans le champ du détecteur selon une certaine direction et vitesse, fixes pendant toute la durée de simulation.

A chaque instant de nouvelles étoiles pénètrent dans le champ de vue du détecteur. La magnitude de ces étoiles est tirée de manière aléatoire selon une loi uniforme entre 1 et 6. Le programme sélectionne à chaque instant les étoiles les plus brillantes sur son champ de vue et effectue les traitements d'estimation avec ces mesures.

La figure 22 représente les traces de quelques étoiles sur le détecteur du senseur pour une durée relativement courte (100 s).

. La direction de défilement est donnée par l'angle $\alpha$ : pour les simulations ci dessous, nous avons choisi $\alpha = 45°$.

On étudie maintenant l'influence du défilement du paysage.

On considère un pointage géocentrique. Pour une période orbitale de 100mn, on obtient une vitesse de défilement du paysage stellaire de 0.06°/s.

Le champ étant de 28°, le temps caractéristique de renouvellement entier du champ est: $$\tau = \frac{28}{0.06} = 467\ s$$

soit une fréquence de renouvellement de 2,1 · 10⁻³

*Hz.*

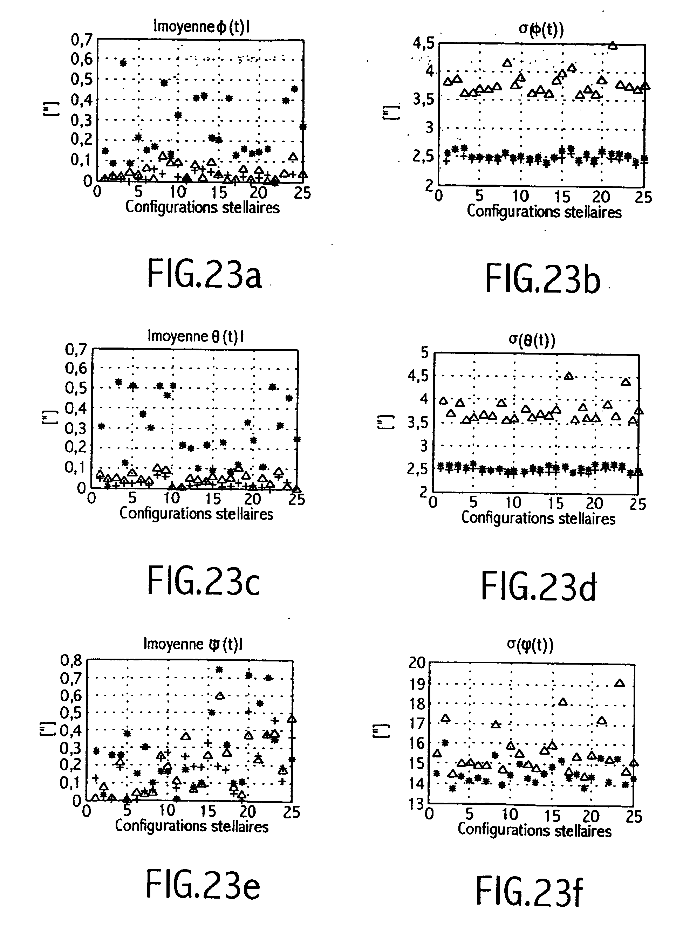

La figure 23 donne les performances pour 25 configurations stellaires tirées aléatoirement, et une durée de simulation de 1000s.

On a regroupé certains résultats significatifs sur les tableaux ci dessous:

Valeurs concernant les valeurs moyennes des attitudes:

| | $\overline{\varphi}$ max | $\overline{\varphi}$ moy | $\sigma(\overline{\varphi})$ | $\overline{\theta}$ max | $\overline{\theta}$ moy | $\sigma(\overline{\theta})$ | $\overline{\psi}$ max | $\overline{\psi}$ moy | $\sigma(\overline{\psi})$ |
|---|---|---|---|---|---|---|---|---|---|
| *1- Classique* | *0.578* | *0.157* | *0.241* | *0.540* | *0.149* | *0.303* | *0.753* | *0.108* | *0.339* |
| *2- Distorsion* | *0.195* | *0.026* | *0.038* | *0.067* | *0. 004* | *0.031* | *0.512* | *0.09* | *0.217* |
| *3- Focale* | *0.124* | *0.013* | *0.053* | *0.103* | *0. 004* | *0.055* | *0.594* | *0.083* | *0.237* |

On constate une réduction de l'erreur moyenne maximale obtenue avec un filtrage classique, qui passe de *1.8"* en pointage inertiel à *0.5"* en pointage géocentrique pour les axes transverses. L'écart type sur les 25 configurations demeure le même (*2.6"*).

Les performances atteintes avec les filtrages 2 et 3 sont du même ordre de grandeur qu'en pointage inertiel ( environ *0.1"* pour les valeurs moyennes maximales).

Valeurs concernant les écarts types :

| | $\varphi\ \theta$ | | | | $\psi$ | |
|---|---|---|---|---|---|---|
| | σ max | σ moy | σ max | σ moy | σ max | σ moy |
| *1- Classique* | *2.670* | *2.532* | *2.653* | *2.539* | *16.002* | *14.538* |
| *2- Distorsion* | *2.591* | *2.470* | *2.588* | *2.469* | *95.997* | *14.523* |
| *3- Focale* | *4.480* | *3.792* | *4.152* | *3.772* | *19.121* | *15.607* |

Le défilement du paysage n'a pas de conséquence visible sur les valeurs des écarts types.

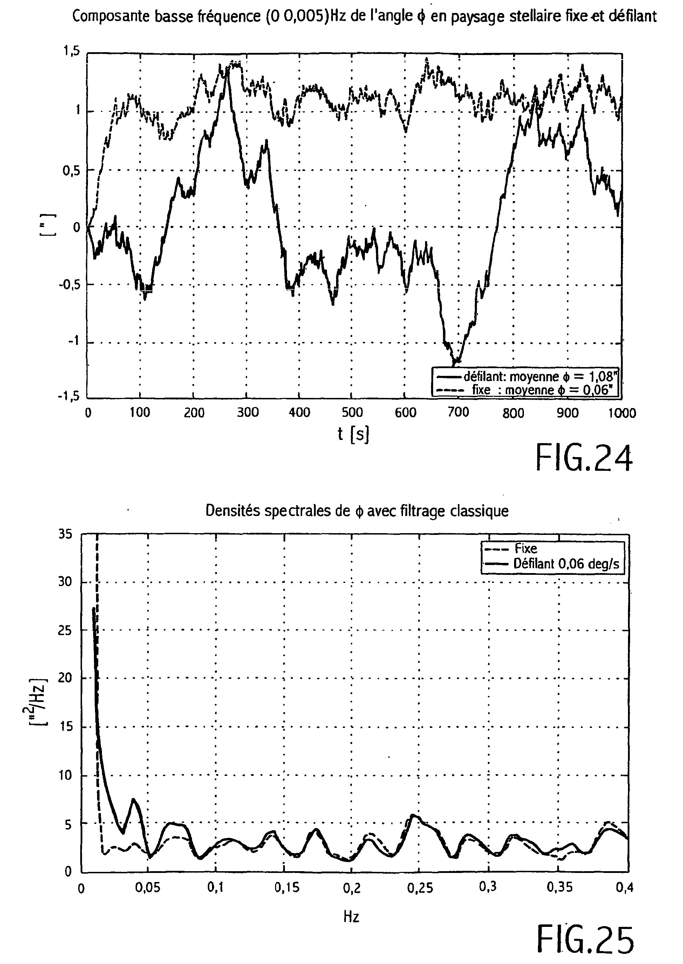

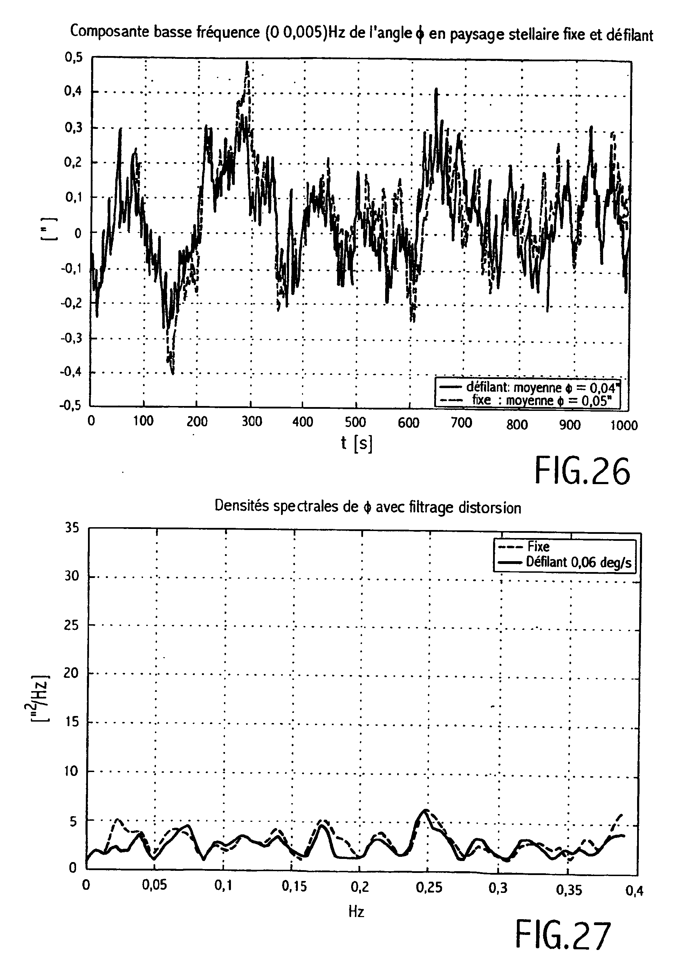

Nous avons tracé ci dessous (figure 24 et figure 26) les courbes temporelles de l'angle $\varphi$ obtenues en paysage fixe et paysage défilant pour une des configurations. Afin de rendre ces courbes plus 'lisibles', nous n'avons représenté que les composantes basse fréquence *([00.005]* Hz) de ces signaux. (filtrage par un passe bas).

La figure 24 montre les résultats obtenus avec un algorithme classique. Ceci met en évidence le biais quasiment stationnaire en paysage fixe (valeur moyenne de 1.08").

En paysage défilant, ce biais évolue au cours du temps autour d'une valeur moyenne presque nulle (ici de l'ordre de 0.06") avec des valeurs pouvant atteindre 1.3".

En fait, autour des fréquence de renouvellement du paysage stellaire (soit 2 10⁻³ Hz), on voit apparaître des dynamiques basses fréquence liées au temps caractéristique $\tau$ de renouvellement du champ dues à la distorsion, qui n'existaient pas en pointage inertiel.

La figure 25 illustre ce résultat, où l'on a tracé les densités spectrales de l'angle $\varphi$ en paysage fixe et défilant avec un filtrage classique.

Le filtrage de la distorsion permet de faire abaisser le niveau de bruit du à la distorsion, et donc de s'affranchir de ces dynamiques en basse fréquence.

La figure 26 présente les mêmes courbes temporelles que la figure 6 mais avec utilisation du filtre estimant la distorsion. Ceci illustre le filtrage non seulement des biais en inertiel, mais aussi du niveau d'énergie des basses fréquences (valeur maximale égale ici à 0.5") qui est illustré sur la figure 27, où l'on a tracé les densités spectrales du signal.

Nous présentons maintenant les résultats d'une simulation avec une vitesse de défilement égale à 0.1°/s. La durée de simulation de 1000 s. est peu réaliste (il s'agit d'une rotation autour d'un axe fixe à vitesse élevée sur une durée relativement longue) mais permet de moyenner les erreurs de type bruit blanc sur un grand nombre de poses.

Valeurs concernant les valeurs moyennes des attitudes:

|  | $\bar{\varphi}$ max | $\bar{\varphi}$ moy | $\sigma(\bar{\varphi})$ | $\bar{\theta}$ max | $\bar{\theta}$ moy | $\sigma(\bar{\theta})$ | $\bar{\psi}$ max | $\bar{\psi}$ moy | $\sigma(\bar{\psi})$ |
|---|---|---|---|---|---|---|---|---|---|
| 1- Classique | 0.453 | 0.030 | 0.222 | 0.455 | 0.047 | 0.216 | 0.502 | 0.015 | 0.195 |
| 2- Distorsion | 0.141 | 0.000 | 0.047 | 0.077 | 0.015 | 0.034 | 0.452 | 0.032 | 0.153 |
| 3- Focale | 0.133 | 0.026 | 0.066 | 0.163 | 0.025 | 0.061 | 0.615 | 0.031 | 0.172 |

On constate une diminution de la valeur moyenne maximale de l'erreur d'attitude avec l'algorithme classique qui passe pour l'angle φ de *0.57"* (à *0.06°/s*) à *0.45"*. Ceci peut s'expliquer par le fait que la dynamique étant plus élevée dans ce cas, le nombre d'étoiles servant à l'estimation de l'attitude est plus grand, d'où un meilleur "moyennage".

En revanche, les niveaux de performances obtenus avec les deux algorithmes non classiques restent toujours du même ordre de grandeur (environ 0.1" en valeur max)

Valeurs concernant les écarts types :

|  | φ | | θ | | ψ | |
|---|---|---|---|---|---|---|
|  | σ max | σ moy | σ max | σ moy | σ max | σ moy |
| 1- Classique | 2.583 | 2.511 | 12.616 | 2.524 | 15.139 | 14.437 |
| 2- Distorsion | 2.521 | 2.445 | 2.548 | 2.456 | 15.118 | 14.429 |
| 3- Focale | 4.111 | 3.752 | 3.910 | 3.741 | 16.312 | 15.436 |

La encore, ces résultats illustrent le fait que les écarts types ne sont pas altérés par la dynamique du satellite.

L'influence de la vitesse sur le contenu spectral des erreurs d'attitude sera vu ci-après.

On présente maintenant une modélisation spectrale des erreurs dues au résidu de distorsion.

Il s'agit de donner le contenu spectral du bruit occasionné par le résidu de distorsion modélisé comme cité précédemment.

Nous avons vu qu'en pointage inertiel, la distorsion était responsable d'un biais qui dépendait de la configuration stellaire. Lorsque le satellite est animé d'une vitesse de rotation non nulle dans le repère inertiel, le paysage stellaire évolue au cours du temps, provoquant des fluctuations temporelles de ce biais. On voit alors apparaître des dynamiques basse fréquence sujettes au temps caractéristique τ de renouvellement du champ de vue.

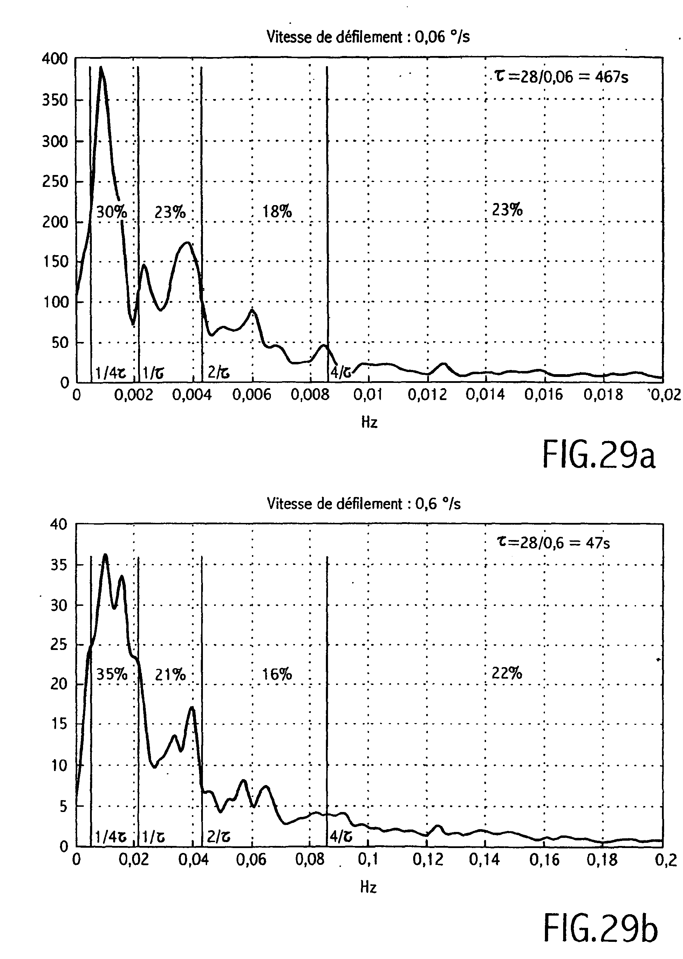

Nous avons calculé les densités spectrales des erreurs en attitude sur les axes transverses obtenues avec la seule présence des bruits de distorsion et ce pour 6 simulation temporelles différentes. Nous avons tracé sur la figure 29 l'allure de la densité moyenne pour deux vitesses de défilement (0.06°/s et 0.6°/s)

On constate une répartition moyenne d'énergie sur la plage de fréquence [0-2Hz] dépendant de qui se résume ainsi:

|  | *[0,1/4τ]* | *[1/4τ, 1/τ]* | *[1/τ, 2/τ]* | *[2/τ, 4/τ]* | *[4/τ, 2]* |
|---|---|---|---|---|---|
| % d'énergie | 6 | 33 | 22 | 17 | 22 |

Ceci confirme la nature "harmonique" des bruits "FOV" dues à la distorsion modélisée de la façon qui est décrite dans cette note en paysage défilant. Ce n'est plus un biais tel qu'on l'a en pointage inertiel. Ces erreurs peuvent être modélisées en supposant que toute l'énergie se trouve sur la plage de fréquence [*1/4τ*; *2/τ*].

En termes d'analyses de robustesse, les résultats ci dessus demandent sont facilement confortés en étudiant la robustesse de l'algorithme :

- à l'estimation d'un résidu de distorsion d'ordre 3 et 5.
- à une erreur de pointage (dans la mesure où la méthode repose sur une linéarisation des équations autour d'une attitude de consigne),
- à une hypothèse sur le poids relatif de la distorsion par rapport au bruit de mesure,
- à la présence d'erreurs "FOV" de type non radial. En effet, à ce stade l'algorithme a été valide en présence d'erreurs conformes au modèle envisagé. La robustesse de l'algorithme à d'autres types d'erreurs, et en particulier à des erreurs non radiales est donc facilement évaluée.

Nous nous limiterons à étudier la robustesse des algorithmes en pointage inertiel : les erreurs "FOV" se traduisant directement par un biais, les résultats sont plus simples à analyser. De plus, on connaît moins bien les évolutions temporelles des erreurs de type "FOV".

Dans chacune des analyses de robustesse, nous effectuons une série de 25 simulations temporelles (d'une durée égale à 1000 s) et calculons la valeur moyenne maximale et l'écart type maximal des erreurs d'attitudes permettant de caractériser le comportement des algorithmes. Ces résultats sont à comparer à ceux qui ont été obtenus lors de l'étude en paysage fixe avec les hypothèses nominales (figure 4) dont les résultats sont rappelés à chaque fois.

Pour une estimation d'un résidu de distorsion en D3, on suppose ici que le résidu de distorsion n'est pas uniquement d'ordre 5 (paramètre en $D_5$), mais qu'il subsiste une contribution d'ordre 3 (paramètre $D_3$), liée à l'erreur d'estimation lors de sa calibration. L'algorithme d'estimation de la distorsion est alors modifié de façon à prendre en compte des erreurs radiales d'ordre 3.

Rappelons que cette même modélisation est utilisée lors de la génération de mesure des simulations.

On considère les contribution en $D_5$ et $D_3$ du même ordre de grandeur, soit 9" en bord de champ.

On a alors: $D_3 = 0.03\ m^{-2}$ et $D_5 = 6\ m^{-4}$.

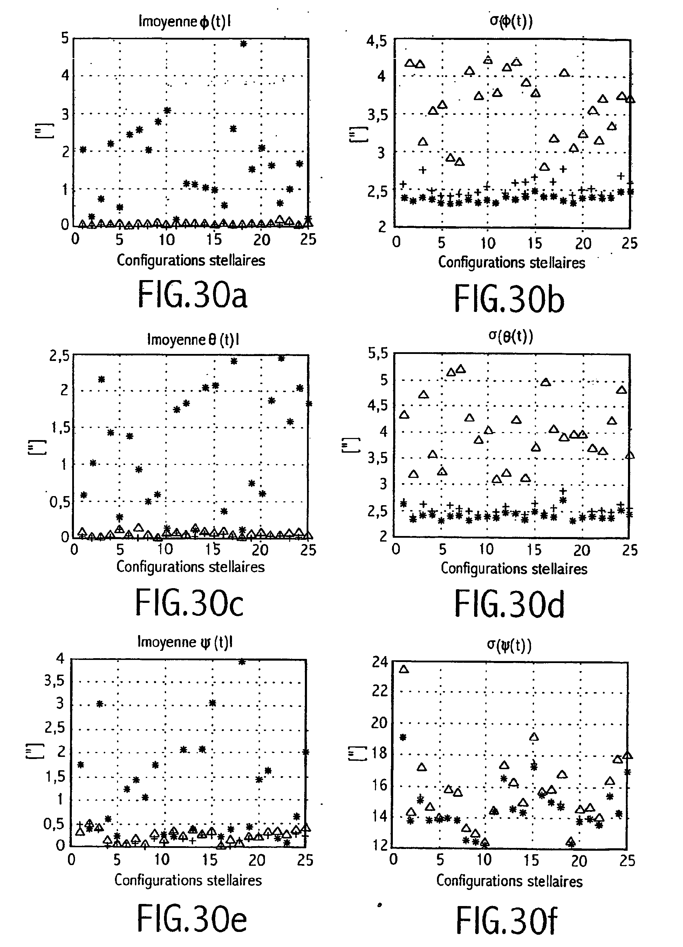

Le résultat est illustré par la figure 30 et synthétisé dans le tableau ci dessous.

Rappels des résultats "nominaux"

|  | φ | | θ | | ψ | |
|---|---|---|---|---|---|---|
|  | $\bar{\varphi}$ max | σ max | $\bar{\theta}$ max | σ max | $\bar{\psi}$ max | σ max |
| *1- Classique* | *1.82* | *2.52* | *1.76* | *2.67* | *2.50* | *19.95* |
| *2- Distorsion* | *0.06* | *2.70* | *0.11* | *2.93* | *0.30* | *19.98* |
| *3- Focale* | *0.11* | *4.33* | *0.13* | *4.87* | *0.34* | *22.91* |

Résultats de simulation

|  | φ | | θ | | ψ | |
|---|---|---|---|---|---|---|
|  | $\bar{\varphi}$max | σ max | $\bar{\theta}$max | σ max | $\bar{\psi}$ max | σ max |
| *1- Classique* | 4.846 | 2.48 | 2.443 | 2.69 | 3.966 | *19.05* |
| *2- Distorsion* | *0.067* | 2.78 | *0.121* | 2.86 | *0.483* | *19.07* |
| *3- Focale* | *0.157* | 4.21 | *0.134* | *5.18* | 0.490 | 23.37 |

En fait on a doublé la valeur relative de la distorsion au bord de champ, en supposant deux contributions de 9" d'ordre différents. Ceci peut se constater sur les performances obtenues avec le filtrage classique où on a une augmentation très nette de la valeur moyenne max. En revanche, les niveaux de performances atteints par le filtrage "distorsion" sont équivalents dans les deux cas.

De plus, l'estimation du paramètre supplémentaire $D_3$, ne provoque qu'une infime augmentation du niveau de bruit liée à l'augmentation de nombre d'inconnues.

Pour des erreurs de pointage, on considère à nouveau, et dans toute la suite, que le résidu de distorsion est uniquement d'ordre 5.

On a pris en compte une erreur de pointage tirée aléatoirement suivant une loi de distribution uniforme d'amplitude 500μrad sur les trois axes.

Dans un premier temps, l'erreur de pointage a été tirée aléatoirement à chaque pas de temps ("type vibration"), puis a été supposée constante tout au long de la simulation ("type biais").

Pour rappel des résultats "nominaux"

|  | φ | | θ | | ψ | |
|---|---|---|---|---|---|---|
|  | $\bar{\varphi}$ max | σ max | $\bar{\theta}$ max | σ max | $\bar{\psi}$ max | σ max |
| *1- Classique* | *1.82* | *2.52* | *1.76* | *2.67* | *2.50* | *19.95* |

(suite)

|  | φ | | θ | | ψ | |
|---|---|---|---|---|---|---|
|  | $\overline{\varphi}$ max | σ max | $\overline{\theta}$ max | σ max | $\overline{\psi}$ max | σ max |
| 2- Distorsion | 0.06 | 2.70 | 0.11 | 2.93 | 0.30 | 19.98 |

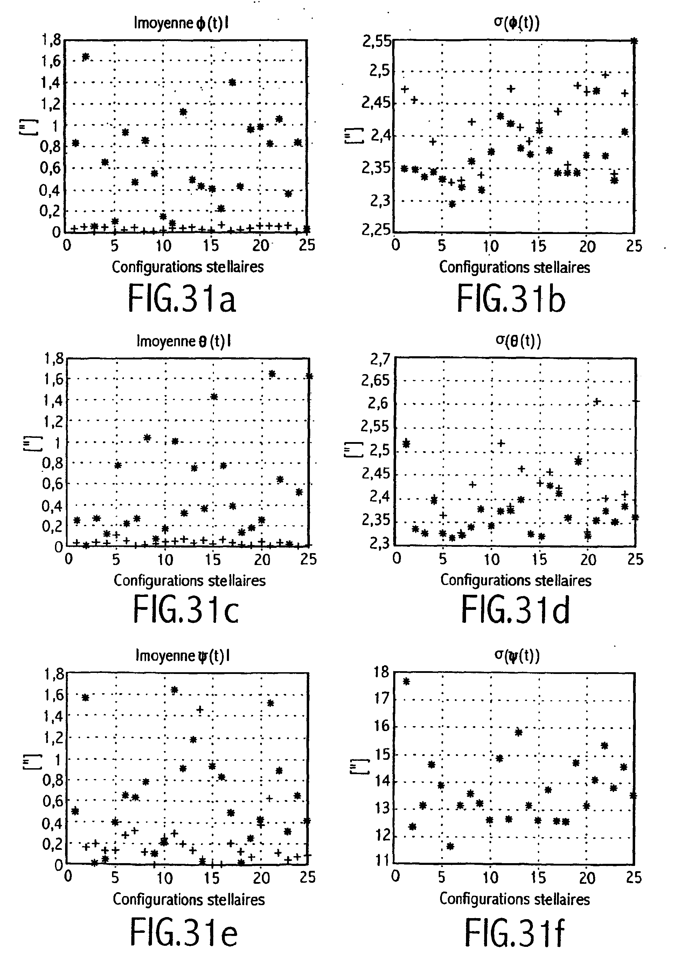

Pour les erreurs de pointage type "vibration", le résultat est illustré par la figure 31 et synthétisé dans le tableau ci dessous.

|  | φ | | θ | | ψ | |
|---|---|---|---|---|---|---|
|  | $\overline{\varphi}$ max | σ max | $\overline{\theta}$ max | $\overline{\sigma}$ max | ψ max | $\overline{\sigma}$ max |
| 1- Classique | 1.64 | 2.55 | 1.64 | 2.51 | 1.64 | 17.74 |
| 2- Distorsion | 0.064 | 2.55 | 0.108 | 2.61 | 0.62 | 17.74 |

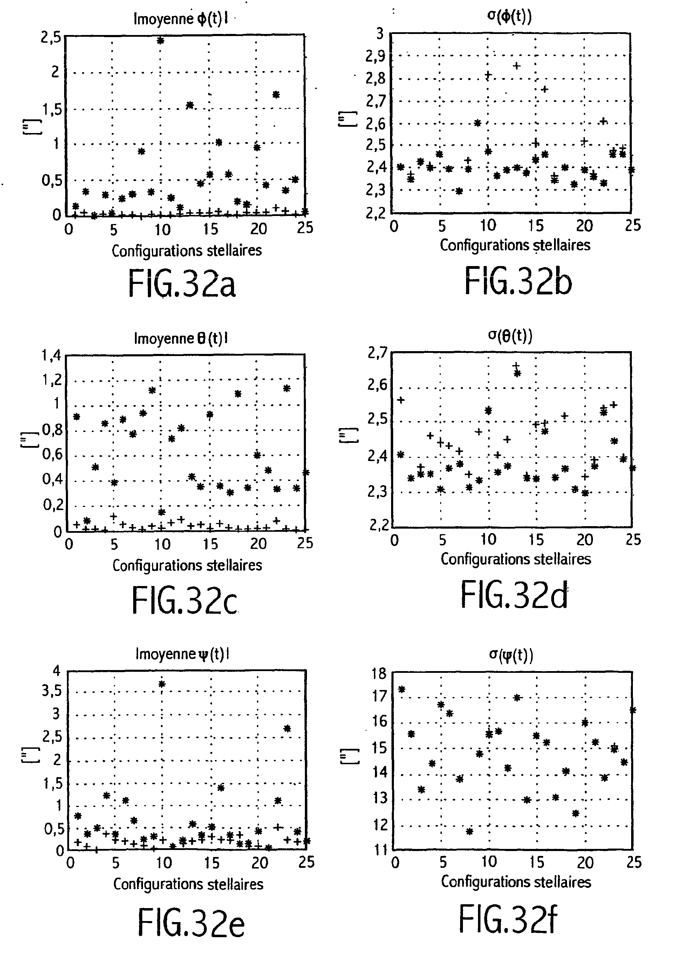

Pour des erreurs de pointage type "biais", le résultat est illustré par la figure 32 et synthétisé dans le tableau ci dessous.

|  | φ | | θ | | ψ | |
|---|---|---|---|---|---|---|
|  | $\overline{\varphi}$ max | σ max | $\overline{\theta}$ max | σ max | $\overline{\psi}$ max | σ max |
| 1- Classique | 2.42 | 2.60 | 1.13 | 2.63 | 3.66 | 17.31 |
| 2- Distorsion | 0.09 | 2.85 | 0.12 | 2.66 | 0.48 | 17.35 |

Dans les deux cas l'ordre de grandeur des écart types n'est pas affecté.

On remarque que l'effet de réduction des biais en attitude par l'algorithme est toujours observé, nous ramenant à des niveaux de performances proches du cas nominal.

L'algorithme est donc robuste à des erreurs de pointage de l'ordre de grandeur de celles qui sont attendues.

En ce qui concerne la robustesse au rapport distorsion/bruit, les simulations ont été reconduites avec des hypothèses successivement 5 fois plus fortes puis 5 fois plus faibles sur l'erreur de distorsion, le niveau de bruit restant inchangé (37").

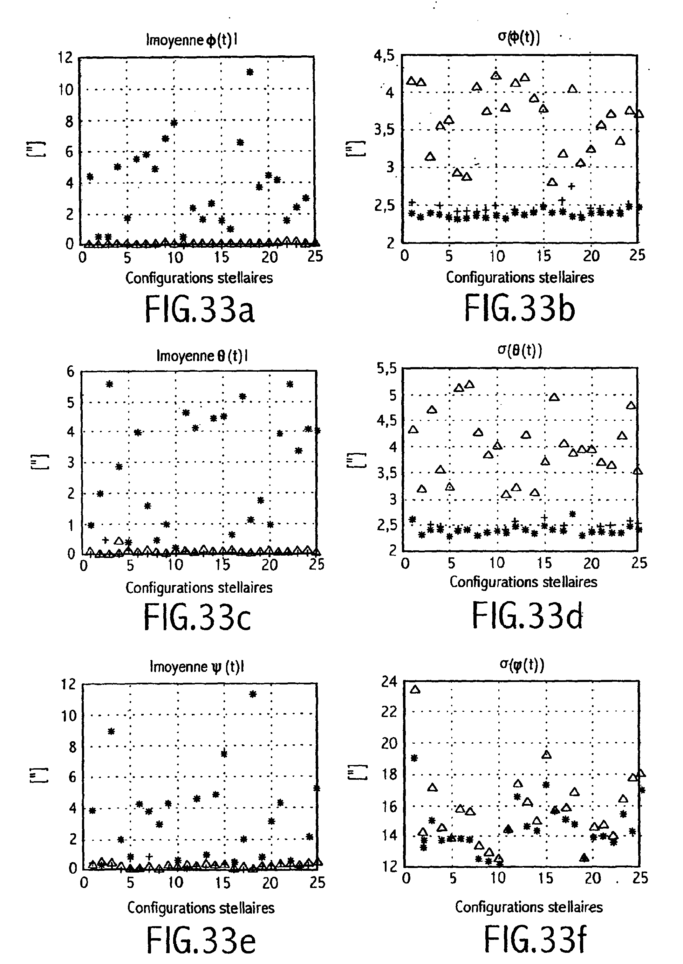

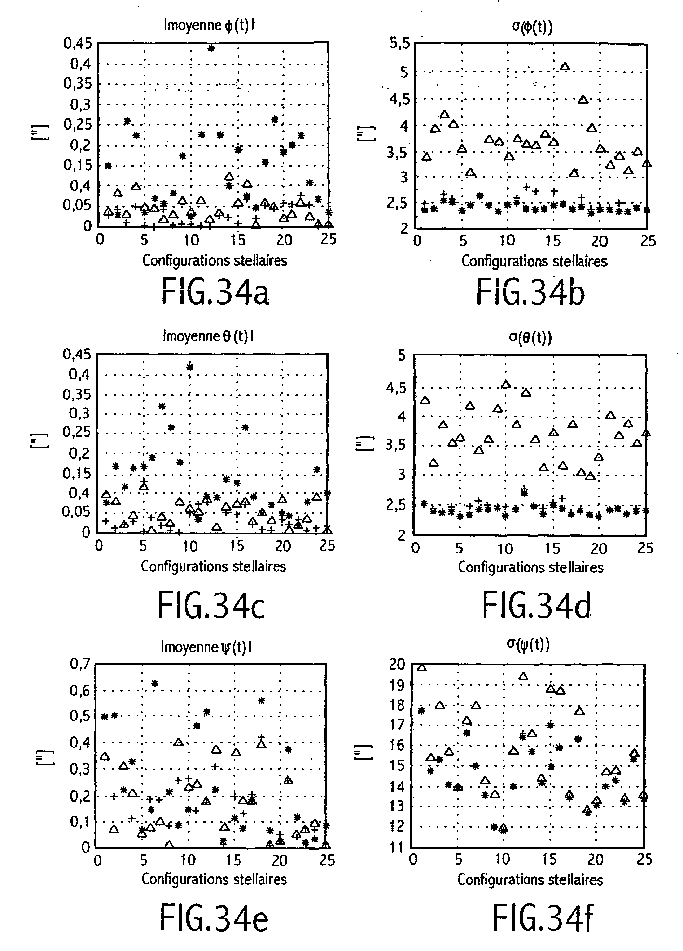

Les résultats respectifs sont illustrés par les figure 33 et figure 34 et synthétisés dans les tableaux ci dessous.

Pour rappel des résultats "nominaux"

|  | φ | | θ | | ψ | |
|---|---|---|---|---|---|---|
|  | $\overline{\varphi}$ max | σ max | $\overline{\theta}$ max | σ max | $\overline{\psi}$ max | σ max |
| 1- Classique | 1.82 | 2.52 | 1.76 | 2.67 | 2.50 | 19.95 |
| 2- Distorsion | 0.06 | 2.70 | 0.11 | 2.93 | 0.30 | 19.98 |
| 3- Focale | 0.11 | 4.33 | 0.13 | 4.87 | 0.34 | 22.91 |

Pour la distorsion 5 fois plus forte

|  | φ | | θ | | ψ | |
|---|---|---|---|---|---|---|
|  | $\overline{\varphi}$ max | σ max | $\overline{\theta}$ max | σ max | $\overline{\psi}$ max | σ max |
| 1- Classique | 11.04 | 2.48 | 5.60 | 2.69 | 11.27 | 19.05 |
| 2- Distorsion | 0.07 | 2.75 | 0.12 | 2.70 | 0.48 | 19.06 |
| 3- Focale | 0.16 | 4.21 | 0.13 | 5.18 | 0.49 | 23.37 |

Pour la distorsion 5 fois plus faible

|  | φ | | θ | | ψ | |
|---|---|---|---|---|---|---|
|  | $\overline{\varphi}$ *max* | *σ max* | $\overline{\theta}$ max | *σ max* | $\overline{\psi}$ max | *σ max* |
| *1- Classique* | 0.44 | 2.63 | 0.42 | 2.70 | 0.63 | 17.74 |
| *2- Distorsion* | 0.07 | 2.80 | 0.12 | 2.76 | 0.50 | 17.74 |
| *3- Focale* | 0.12 | 5.09 | 0.11 | 4.52 | 0.40 | 19.81 |

Les écarts types de l'erreur d'attitude sont insensibles à l'hypothèse sur la distorsion; ils ne dépendent que du niveau de bruit de mesure et de l'algorithme utilisé.

De même, l'utilisation d'un des deux algorithmes permet d'abaisser la valeur des biais vers une performance globalement indépendante de l'hypothèse sur la distorsion.

En revanche, l'algorithme estimant les coefficients de distorsion ne dégrade pas le bruit contrairement à l'algorithme estimant les focales locales : il peut donc être mis en oeuvre même lorsque le niveau de la distorsion est très faible.

En ce qui concerne la robustesse aux autres erreurs de type "FOV" non radiales, il existe d'autres sources d'erreur dans la catégorie "FOV" dépendant de l'étoile et/ou de la position dans le champ:

- aberrations chromatiques (de distribution à priori radiale),
- erreurs catalogue (de distribution aléatoire),
- erreurs d'interpolation (de distribution aléatoire).

Leur impact sur la mesure d'attitude se traduit également par un biais (en pointage inertiel) lié à la géométrie des étoiles dans le champ et varie beaucoup d'un senseur à l'autre.

On cherche donc à apprécier la robustesse de l'algorithme à une erreur répartie de manière aléatoire en amplitude et direction en fonction de chaque étoile et constante tout au long de la simulation en pointage inertiel. L'erreur a été tirée de façon aléatoire suivant une loi uniforme d'amplitude respectivement égale à 1" et 5".

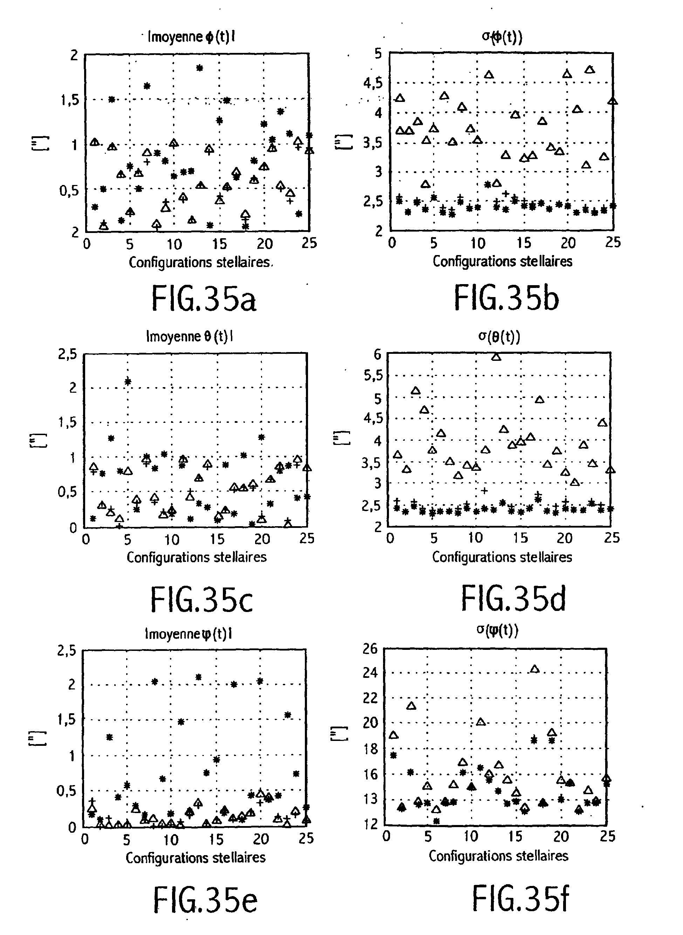

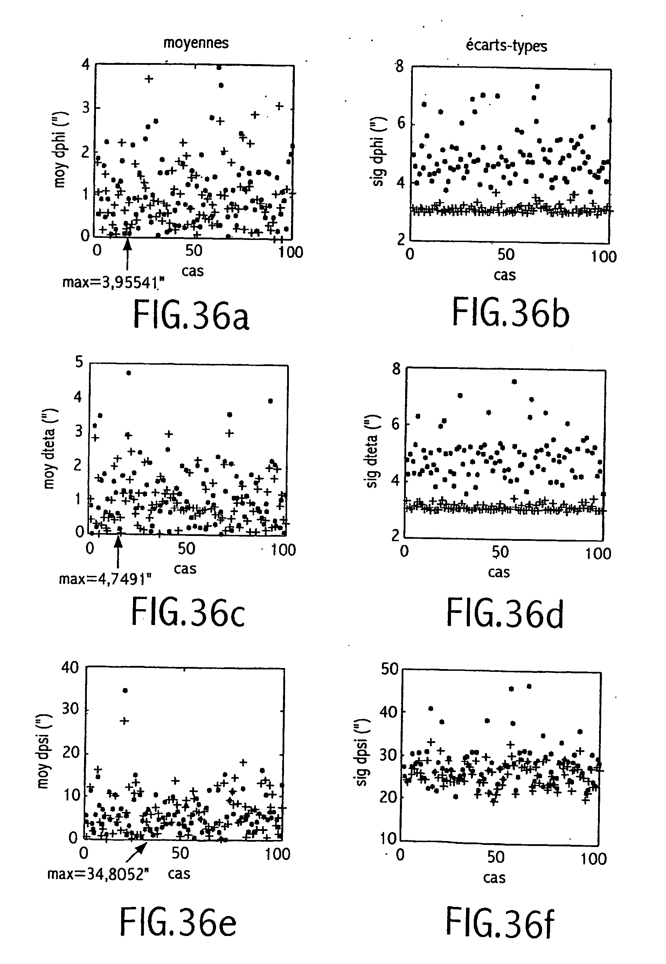

Les résultats respectifs sont illustrés par les *figure* 35 et figure 36, et synthétisés dans les tableaux ci dessous.

Pour rappel des résultats "nominaux" :

|  | φ | | θ | | ψ | |
|---|---|---|---|---|---|---|
|  | $\overline{\varphi}$ *max* | *σ max* | $\overline{\theta}$ max | *σ max* | $\overline{\psi}$ max | *σ max* |
| *1- Classique* | 1.82 | 2.52 | 1.76 | 2.67 | 2.50 | 19.95 |
| *2- Distorsion* | 0.06 | 2.70 | 0.11 | 2.93 | 0.30 | 19.98 |
| *3- Focale* | 0.11 | 4.33 | 0.13 | 4.87 | 0.34 | 22.91 |

Pour une erreur d'amplitude 1" :

|  | φ | | θ | | ψ | |
|---|---|---|---|---|---|---|
|  | $\overline{\varphi}$ *max* | *σ max* | $\overline{\theta}$ *max* | *σ max* | $\overline{\psi}$ *max* | *σ max* |
| *1- Classique* | 1.82 | 2.77 | 2.09 | 2.62 | 2.07 | 18.60 |
| *2- Distorsion* | 1.03 | 2.78 | 1.00 | 2.82 | 0.40 | 18.74 |
| *3- Focale* | 1.03 | 4.68 | 0.96 | 5.90 | 0.42 | 24.22 |

Pour une erreur d'amplitude 5" :

|  | φ | | θ | | ψ | |
|---|---|---|---|---|---|---|
|  | $\overline{\varphi}$ *max* | *σ max* | $\overline{\theta}$ *max* | *σ max* | $\overline{\psi}$ *max* | *σ max* |
| *1- Classique* | 5.32 | 2.77 | 4.66 | 2.62 | 2.17 | 18.60 |

(suite)

| | φ | | θ | | ψ | |
|---|---|---|---|---|---|---|
| | $\overline{\varphi}$ max | σ max | $\overline{\theta}$ max | σ max | $\overline{\psi}$ max | σ max |
| 2- Distorsion | 4.94 | 2.78 | 4.80 | 2.82 | 0.42 | 18.74 |
| 3- Focale | 4.96 | 4.68 | 4.80 | 5.89 | 0.43 | 24.22 |

On retrouve sensiblement les mêmes valeurs d'écarts types ce qui implique que le niveau de bruit ne dépend pas là non plus des hypothèses sur les erreurs "FOV" mais uniquement du bruit de mesure.

En revanche, en ce qui concerne les biais, on remarque une perte d'efficacité pour les deux d'algorithmes car la réduction n'est plus que d'un facteur 2 pour une erreur non radiale de 1" et n'est plus perceptible pour 5".

On rappelle que l'hypothèse sur le résidu de distorsion est de 9" en bord de champ (erreur déterministe) alors que la contribution de ces erreurs non radiales se fait de façon aléatoire pour une amplitude donnée. Ceci explique le fait que les performances en erreurs d'attitude ne soient pas trop dégradées lorsque cette amplitude est égale à 1".

L'efficacité des deux algorithmes est quelque peu limitée par la présence d'erreurs "FOV" dont la distribution n'est pas radiale. Toutefois l'algorithme proposé (algorithme "distorsion") n'introduit pas de dégradation du bruit, donc au pire il devient inutile.

L'utilisation d'un algorithme estimant des coefficients de distorsion plutôt que des distances focales s'avère intéressant si on considère que les résidus de distorsion peuvent se modéliser suivant la loi radiale exposée dans cette note.

Cet algorithme permet de filtrer les erreurs dues à la distorsion, en particulier,

- les biais (réduction d'un facteur 10 environ) en pointage inertiel
- les erreurs basses fréquences ([0;0.05] Hz) qui apparaissent en paysage défilant.

Par ailleurs, le faible nombre des paramètres estimés (4/5), font que contrairement à l'algorithme estimant les focales locales, le niveau de bruit haute fréquence n'est pas altéré par ces traitements.

L'algorithme proposé est simple. Il peut être implanté en ligne dans le traitement des mesures au niveau étoile. Il s'appuie prérérentiellement sur une connaissance approchée de l'attitude à mesurer, compatible avec les spécifications de pointage.

Les analyses de robustesse ont montré que certaines limites de l'efficacité de cet algorithme existent, en particulier lorsque la contribution des erreurs "FOV" a distribution non radiale est importante par rapport au résidu de distorsion (modélisé de façon radiale). Cependant, l'utilisation de l'algorithme d'estimation des coefficients de distorsion ne dégrade pas le signai ce qui permet de proposer son implantation dans tous les cas.

L'intérêt de cet algorithme estimant les paramètres de distorsion est amélioré encore au moyen d'une appréciation plus fine de la physique du senseur, ou encore par une modélisation plus fine des erreurs du senseur, éventuellement en s'appuyant sur des essais sur maquette.

**Revendications**

1. Dispositif de détermination de l'attitude d'un dispositif spatial à l'aide d'un senseur optique stellaire, comportant un tel senseur optique stellaire prévu pour capter des projections (xmi, ymi) de plusieurs étoiles sur ce senseur, le dispositif comportant en outre des moyens de calcul aptes à déterminer des valeurs angulaires d'attitude ($\varphi$, $\theta$, $\psi$) du dispositif spatial par rapport aux étoiles en résolvant un système d'équations de mesure d'attitude qui a comme données d'entrée notamment les projections des étoiles (xmi, ymi) sur le senseur ainsi qu'une distance focale de référence ($f_{réf}$) du senseur servant à convertir les projections des étoiles (xmi, ymi) en des directions senseur-étoile (wi) dans un repère lié au senseur, **caractérisé en ce que** les moyens de calcul sont prévus pour prendre en compte, comme inconnue(s) supplémentaire(s) du système d'équations, un ou des paramètre(s) ($D_1$,..., $D_7$) définissant une série d'écarts de distance focale, écarts influençant chacun la conversion de la projection (xmi, ymi) d'une étoile respective en la direction senseur-étoile (wi) correspondante, ces moyens de calcul étant prévus pour déterminer ce ou ces paramètres ($D_1$,..., $D_7$) définissant une série d'écarts de distance focale de manière simultanée aux valeurs angulaires ($\varphi$, $\theta$, $\psi$) d'attitude du dispositif spatial.

2. Dispositif selon la revendication 1, **caractérisé en ce que** la détermination des valeurs angulaires d'attitude du dispositif consistent en la détermination d'écarts d'orientation ($\varphi$, $\theta$, $\psi$) par rapport à une orientation approchée (vi) des étoiles par rapport au senseur.

3. Dispositif selon l'une quelconque des revendications précédentes, **caractérisé en ce que** le système d'équations est un système linéaire.

4. Dispositif selon l'une quelconque des revendications précédentes, **caractérisé en ce que** le ou les paramètres ($D_1$,..., $D_7$) formant inconnues du système d'équations et définissant une série d'écarts de distance focale consistent en un ou plusieurs paramètres définissant une loi d'évolution de la distance focale en fonction de la position de la projection d'étoile sur le senseur, loi qui donne l'écart de distance focale essentiellement en fonction d'une distance (r) mesurée entre position de projection et centre du senseur.

5. Dispositif selon la revendication 4, **caractérisé en ce que** la loi d'évolution de la distance focale en fonction de la position de projection d'étoile sur le senseur est une loi polynomiale de la distance (r) entre position de projection et centre optique du senseur, situé sur l'axe paraxial de l'optique du senseur.

6. Dispositif selon la revendication 5, **caractérisé en ce que** la loi d'évolution de la distance focale est du type :

$$f' = (1 + D_5 r^4) . f$$

où r est le rayon entre le centre du senseur et la position de la projection d'étoile sur le senseur, f est la distance focale de référence, f est la distance focale donnée en fonction du rayon, et $D_5$ est le paramètre à déterminer.

7. Dispositif selon l'une quelconque des revendications précédentes **caractérisé en ce que** le système d'équations est de la forme :

$$\Delta_i = \begin{pmatrix} \dfrac{xm_i - x_i}{f_{réf}} \\ \dfrac{ym_i - y_i}{f_{réf}} \end{pmatrix} = \begin{pmatrix} \dfrac{vix.viy}{viz^2} & -(1+\dfrac{vix^2}{viz^2}) & \dfrac{viy}{viz} & 0...0 & \dfrac{vix}{viz} & 0...0 \\ (1+\dfrac{viy^2}{viz^2}) & -\dfrac{vix.viy}{viz^2} & -\dfrac{vix}{viz} & 0...0 & \dfrac{viy}{viz} & 0...0 \end{pmatrix} . \begin{pmatrix} \varphi \\ \theta \\ \psi \\ \vdots \\ \partial fsf_i \\ \vdots \end{pmatrix} = J_i . \begin{pmatrix} \varphi \\ \theta \\ \psi \\ \vdots \\ \partial fsf_i \\ \vdots \end{pmatrix}$$

où xmi et ymi sont des coordonnées de la projection captée d'une étoile i sur une surface de projection du senseur, selon deux axes perpendiculaires x et y ; xi et yi sont des coordonnées de consigne de la projection de cette étoile selon ces mêmes axes ; vix et vly sont des coordonnées selon ces mêmes axes d'un vecteur d'orientation de consigne de cette même étoile i ; viz est une coordonnée de ce même vecteur d'orientation de consigne selon un axe (z) perpendiculaire à la surface de projection du senseur ; $\delta fsf_i$ est un écart de distance focale appliqué à l'étoile i ; $\varphi$, $\theta$, $\psi$ sont des angles de rotation selon les trois axes (x, y, z) du senseur entre l'attitude de consigne et l'attitude à déterminer du dispositif spatial, et $f_{réf}$, est la distance focale de référence du senseur.

8. Satellite, **caractérisé en ce qu'**il inclut un dispositif conforme à l'une quelconque des revendications précédentes.

**Claims**

1. A device for determining the attitude of a spacecraft, by means of an optical star sensor, including such an optical star sensor provided for sensing projections (xmi, ymi) of several stars on this sensor, the device further including calculation means capable of determining angular values ($\varphi$, $\theta$, $\psi$) of attitude of the spacecraft relatively to the stars by solving a system of attitude measurement equations which has as input data notably the projections of the stars (xmi, ymi) on the sensor as well as a reference focal length ($f_{ref}$) of the sensor being used for converting the projections of the stars (xmi, ymi) into sensor-star directions (wi) in a frame of reference associated with the sensor, **characterized in that** the calculation means are provided for taking into account, as additional unknown(s) in the system of equations, parameter (s) ($D_1$ ... , $D_7$) defining a series of focal length errors, each of which errors having an influence on converting the projection (xmi, ymi) of a respective star into the corresponding sensor-star direction (wi), these calculation means being provided for determining this(these) parameter(s) ($D_1$ ... , $D_7$) defining a series of focal length errors simultaneously with determining the values for the attitude angles ($\varphi$, $\theta$, $\psi$) of the spacecraft.

2. The device according to claim 1, **characterized in that** the determination of the angular values of attitude of the craft consists in determining orientation errors ($\varphi$, $\theta$, $\psi$), relative to an approximate orientation (vi) of the stars relatively to the sensor.

3. The device according to any of the preceding claims, **characterized in that** the system of equations is a linear system.

4. The device according to any of the preceding claims, **characterized in that** said parameter(s) ($D_1$ ... , $D_7$) forming unknowns in the system of equations and defining a series of focal length errors consist(s) in one or more parameters defining a relationship of variation of the focal length as a function of the position of the projection of a star on the sensor, said relationship giving the focal length error, essentially as a function of a distance (r) measured between the position of the star projection and the center of the sensor.

5. The device according to claim 4, **characterized in that** the relationship of variation of the focal length as a function of the star projection on the sensor is a polynomial function of the distance (r) between the projection of the star position and the optical center of the sensor situated on the paraxial axis of the optic of the sensor.

6. The device according to claim 5, **characterized in that** the relationship of variation of the focal length is of the type:

$$f' = (1+D_5 r^4) \cdot f$$

wherein r is the radius between the centre of the sensor and the position of the star projection on the sensor, f is the reference focal length, f' is the focal length given as a function of the radius, and $D_5$ is the parameter to be determined.

7. The device according to any of the preceding claims, **characterized in that** the system of equations has the form:

$$\Delta_i = \begin{pmatrix} \dfrac{xm_i - x_i}{f_{ref}} \\[2ex] \dfrac{ym_i - y_i}{f_{ref}} \end{pmatrix} = \begin{pmatrix} \dfrac{vix \cdot viy}{viz^2} & -(1+\dfrac{vix^2}{viz^2}) & \dfrac{viy}{viz} & 0...0 & \dfrac{vix}{viz} & 0...0 \\[2ex] (1+\dfrac{viy^2}{viz^2}) & -\dfrac{vix \cdot viy}{viz^2} & -\dfrac{vix}{viz} & 0...0 & \dfrac{viy}{viz} & 0...0 \end{pmatrix} \cdot \begin{pmatrix} \varphi \\ \theta \\ \psi \\ \cdot \\ \cdot \\ \cdot \\ \partial fsf_i \\ \cdot \\ \cdot \\ \cdot \end{pmatrix} = J_i \cdot \begin{pmatrix} \varphi \\ \theta \\ \psi \\ \cdot \\ \cdot \\ \cdot \\ \partial fsf_i \\ \cdot \\ \cdot \\ \cdot \end{pmatrix}$$

wherein xmi and ymi are the coordinates of the sensed projection of a star i on a projection surface of the sensor, along two perpendicular axes x and y; xi and yi are the set reference coordinates of the projection of this star, along these same axes; vix and viy are coordinates along these same axes of a set reference orientation vector of this same star i; viz is a coordinate of this same set reference orientation vector along an axis (z) perpendicular to the projection surface of the sensor; $\partial fsf_i$ is a focal length error applied to the star i; $\varphi$, $\theta$, $\psi$ are the angles of rotation about the three axes (x, y, z) of the sensor between the set reference attitude and the attitude to be determined of the spacecraft, and $f_{ref}$ is the reference focal length of the sensor.

8. A satellite, **characterized in that** it includes a device according to any of the preceding claims.

**Patentansprüche**

1. Vorrichtung zur Bestimmung der Stellung einer Raumfahrtvorrichtung mittels eines optischen Stellarsensors, die einen derartigen optischen Stellarsensor umfasst, der für die Erfassung der Projektionen (xmi, ymi) mehrerer Sterne auf diesem Sensor vorgesehen ist, wobei die Vorrichtung ferner Rechenmittel umfasst, die dazu geeignet sind, Winkelwerte für die Stellung (φ, θ, ψ) der Raumfahrtvorrichtung gegenüber den Sternen zu bestimmen, indem ein System von Stellungsmessgleichungen aufgelöst wird, dem als Eingangsdaten insbesondere die Projektionen der Sterne (xmi, ymi) auf dem Sensor sowie eine Referenzbrennweite ($f_{réf}$) des Sensors dienen, um die Projektionen der Sterne (xmi, ymi) in Sensor-Stern-Richtungen (wi) in einem Bezugssystem, das mit dem Sensor verbunden ist, umzuwandeln, **dadurch gekennzeichnet, dass** die Rechenmittel dafür vorgesehen sind, als zusätzliche Unbekannte des Gleichungssystems einen oder mehrere Parameter (D1,..., D7) zu berücksichtigen, die eine Reihe von Brennweitenabweichungen festlegen, wobei diese Abweichungen jeweils die Umwandlung der Projektion (xmi, ymi) eines jeweiligen Sterns in die entsprechende Sensor-Stern-Richtung (wi) beeinflussen, wobei diese Rechenmittel dafür vorgesehen sind, diesen oder diese Parameter (D1,..., 07), die eine Reihe von Brennweitenabweichungen festlegen, gleichzeitig mit den Winkelwerten (φ, θ, ψ) für die Stellung der Raumfahrtvorrichtung zu bestimmen.

2. Vorrichtung nach Anspruch 1, **dadurch gekennzeichnet, dass** die Bestimmung der Winkelwerte für die Stellung der Vorrichtung in der Bestimmung von Abweichungen der Orientierung (φ, θ, ψ) gegenüber einer angenäherten Orientierung (vi) der Sterne gegenüber dem Sensor bestehen.

3. Vorrichtung nach einem der vorhergehenden Ansprüche, **dadurch gekennzeichnet, dass** das Gleichungssystem ein lineares System ist.

4. Vorrichtung nach einem der vorhergehenden Ansprüche, **dadurch gekennzeichnet, dass** der oder die Parameter (D1,..., D7), die Unbekannte des Gleichungssystems bilden und eine Reihe von Brennweitenabweichungen festlegen, in einem oder mehreren Parametern bestehen, die einen Verlauf der Entwicklung der Brennweite in Abhängigkeit von der Position der Sternprojektion auf dem Sensor festlegen, wobei dieser Verlauf die Brennweitenabweichung im Wesentlichen in Abhängigkeit von einer Entfernung (r) angibt, die zwischen der Projektionsposition und dem Mittelpunkt des Sensors gemessen wird.

5. Vorrichtung nach Anspruch 4, **dadurch gekennzeichnet, dass** der Verlauf der Entwicklung der Brennweite in Abhängigkeit von der Projektionsposition des Stern auf dem Sensor ein polynomischer Verlauf der Entfernung (r) zwischen der Projektionsposition und dem optischen Mittelpunkt des Sensors ist, der auf der paraxialen Achse der Optik des Sensors liegt.

6. Vorrichtung nach Anspruch 5, **dadurch gekennzeichnet, dass** der Verlauf der Entwicklung der Brennweite von folgendem Typ ist:

$$f' = (1 + D_5 r^4).f$$

wobei r der Radius zwischen dem Mittelpunkt des Sensors und der Projektionsposition des Sterns auf dem Sensor ist, f die Referenzbrennweite ist, f' die in Abhängigkeit vom Radius vorgegebene Brennweite ist und $D_5$ der zu bestimmende Parameter ist.

7. Vorrichtung nach einem der vorhergehenden Ansprüche, **dadurch gekennzeichnet, dass** das Gleichungssystem die folgende Form hat:

$$\Delta_i = \begin{pmatrix} \dfrac{xm_i - x_i}{f_{r\acute{e}f}} \\[2ex] \dfrac{ym_i - y_i}{f_{r\acute{e}f}} \end{pmatrix} = \begin{pmatrix} \dfrac{vix.viy}{viz^2} & -(1+\dfrac{vix^2}{viz^2}) & \dfrac{viy}{viz} & 0...0 & \dfrac{vix}{viz} & 0...0 \\[3ex] (1+\dfrac{viy^2}{viz^2}) & -\dfrac{vix.viy}{viz^2} & -\dfrac{vix}{viz} & 0...0 & \dfrac{viy}{viz} & 0...0 \end{pmatrix} \cdot \begin{pmatrix} \varphi \\ \theta \\ \psi \\ \vdots \\ \partial fsf_i \\ \vdots \end{pmatrix} = J_i \cdot \begin{pmatrix} \varphi \\ \theta \\ \psi \\ \vdots \\ \partial fsf_i \\ \vdots \end{pmatrix}$$

wobei xmi und ymi Koordinaten der erfassten Projektion eines Sterns i auf einer Projektionsfläche des Sensors entlang zweier senkrechter Achsen x und y sind; xi und yi Sollkoordinaten der Projektion dieses Stern entlang dieser Achsen sind; vix und viy Koordinaten entlang derselben Achsen eines Soll-Orientierungsvektors dieses Sterns i sind; viz eine Koordinate dieses Soll-Orientierungsvektors entlang einer Achse (z) senkrecht zu der Projektionsfläche des Sensors ist; $\delta fsf_i$ eine auf den Stern i angewendete Brennweitenabweichung ist; $\varphi$, $\theta$, $\psi$ Rotationswinkel entlang der drei Achsen (x, y, z) des Sensors zwischen der Sollstellung und der zu bestimmenden Stellung der Raumfahrtvorrichtung sind und $f_{r\acute{e}f}$ die Referenzbrennweite des Sensors ist.

8. Satellit, **dadurch gekennzeichnet, dass** er eine Vorrichtung nach einem der vorhergehenden Ansprüche umfasst.

**FIG.1**

**FIG.2**

**FIG.3**

moy=0,016019 sig=2,7566

moy=0,013906 sig=2,6795

moy=0,073418 sig=21,1744

FIG. 4

moy=0,00063175 sig=2,7566

moy=0,22365 sig=2,6795

moy=0,07938 sig=21,1744

FIG. 5

FIG. 6

FIG. 7

FIG. 8

FIG. 9

moyennes

écarts-types

FIG.10a

FIG.10b

FIG.10c

FIG.10d

FIG.10e

FIG.10f

moyennes

max=0,13658"    cas

FIG.11a

écarts-types

FIG.11b

max=0,1696"    cas

FIG.11c

FIG.11d

max=0,8933"    cas

FIG.11e

FIG.11f

moyennes

max=0,13662"

FIG.12a

écarts-types

FIG.12b

max=0,16958"

FIG.12c

FIG.12d

max=0,89256"

FIG.12e

FIG.12f

moyennes

max=0,13657"

FIG.13a

écarts-types

FIG.13b

max=0,16961"

FIG.13c

FIG.13d

max=0,89345"

FIG.13e

FIG.13f

moyennes

moy dphi (")

max=0,24881"

FIG.14a

écarts-types

sig dphi (")

FIG.14b

moy dteta (")

max=0,33579"

FIG.14c

sig dteta (")

FIG.14d

moy dpsi (")

max=2,4322"

FIG.14e

sig dpsi (")

FIG.14f

moyennes

écarts-types

FIG.15a

FIG.15b

FIG.15c

FIG.15d

FIG.15e

FIG.15f

moyennes

écarts-types

max=3,9541"

## FIG.16a

## FIG.16b

max=4,7491"

## FIG.16c

## FIG.16d

max=34,0052"

## FIG.16e

## FIG.16f

φ : moy = 0,021" et σ=2,34"

FIG.17a

θ : moy = -0,040" et σ=2,58"

FIG.17b

Ψ : moy = -0,113" et σ=13,05"

FIG.17c

FIG.18

$\phi$ : moy = 0,296" et $\sigma$=2,76"

FIG.19a

$\theta$ : moy = -1,300" et $\sigma$=2,34"

FIG.19b

$\Psi$ : moy = 1,422" et $\sigma$=14,96"

FIG.19c

Etoile cible i
point focal

FIG.20

Imoyenne φ(t)I

FIG.21a

σ(φ(t))

FIG.21b

Imoyenne θ(t)I

FIG.21c

σ(θ(t))

FIG.21d

Imoyenne ψ(t)I

FIG.21e

σ(ψ(t))

FIG.21f

Configurations stellaires

FIG.22

44

FIG.23a

FIG.23b

FIG.23c

FIG.23d

FIG.23e

FIG.23f

Composante basse fréquence (0 0,005)Hz de l'angle φ en paysage stellaire fixe et défilant

FIG.24

Densités spectrales de φ avec filtrage classique

FIG.25

Composante basse fréquence (0 0,005)Hz de l'angle φ en paysage stellaire fixe et défilant

FIG.26

Densités spectrales de φ avec filtrage distorsion

FIG.27

FIG.28a

FIG.28b

FIG.28c

FIG.28d

FIG.28e

FIG.28f

Vitesse de défilement : 0,06 °/s

$\tau = 28/0,06 = 467s$

30%    23%    18%    23%

1/4τ  1/τ    2/τ    4/τ

Hz

## FIG.29a

Vitesse de défilement : 0,6 °/s

$\tau = 28/0,6 = 47s$

35%    21%    16%    22%

1/4τ  1/τ    2/τ    4/τ

Hz

## FIG.29b

Imoyenne φ(t)I

FIG.30a

σ(φ(t))

FIG.30b

Imoyenne θ(t)I

FIG.30c

σ(θ(t))

FIG.30d

Imoyenne ψ(t)I

FIG.30e

σ(ψ(t))

FIG.30f

FIG.31a

FIG.31b

FIG.31c

FIG.31d

FIG.31e

FIG.31f

Imoyenne φ(t)l

FIG.32a

σ(φ(t))

FIG.32b

Imoyenne θ(t)l

FIG.32c

σ(θ(t))

FIG.32d

Imoyenne ψ(t)l

FIG.32e

σ(ψ(t))

FIG.32f

FIG.33a

FIG.33b

FIG.33c

FIG.33d

FIG.33e

FIG.33f

FIG.34a

FIG.34b

FIG.34c

FIG.34d

FIG.34e

FIG.34f

54

Imoyenne φ(t)I

FIG.35a

σ(φ(t))

FIG.35b

Imoyenne θ(t)I

FIG.35c

σ(θ(t))

FIG.35d

Imoyenne φ(t)I

FIG.35e

σ(φ(t))

FIG.35f

moyennes

max=3,95541"

FIG.36a

écarts-types

FIG.36b

max=4,7491"

FIG.36c

FIG.36d

max=34,8052"

FIG.36e

FIG.36f

**RÉFÉRENCES CITÉES DANS LA DESCRIPTION**

**Documents brevets cités dans la description**

*   US 4617634 A